# EUROPEAN PATENT SPECIFICATION

(11) **EP 1 416 000 B1**
(45) Date of publication and mention of the grant of the patent: **21.12.2011**
(21) Application number: 03256878.4
(22) Date of filing: 30.10.2003
(51) Int. Cl.: C08F 4/64, C08F 10/00, C07F 17/00

(54) **Process for preparing low molecular weight olefin (co)polymer and polymerizing catalyst used therefor**
Verfahren zur Herstellung von Olefin(Co)polymeren mit niedrigem Molekulargewicht und dazu verwendeter Polymerisationskatalysator
Procédé de préparation de (co)polymères d'oléfine de bas poids moléculaire et catalyseur de polymérisation utilisé à cette fin

(30) Priority: 30.10.2002 JP 2002316579
(43) Date of publication of application: 06.05.2004
(60) Divisional application: 05026549.5
(73) Proprietor: Mitsui Chemicals, Inc., Tokyo (JP)
(72) Inventor: Tohi, Yasushi, Chiba 299-0265 (JP); Urakawa, Naomi, Chiba 299-0265 (JP); Endo, Koji, Chiba 299-0265 (JP); Kawai, Koji, Chiba 299-0265 (JP); Okawa, Kazunori, Chiba 299-0265 (JP); Tsutsui, Toshiyuki, Kuga-gun Yamaguchi 740-0061 (JP)
(74) Representative: Benson, John Everett

(56) References cited:
- US-B1- 6 469 188
- LEE M H ET AL: "Ethylene-bridged pseudo-Cs symmetric ansa-zirconocene complexes: synthesis, structures and propylene polymerization behavior" JOURNAL OF ORGANOMETALLIC CHEMISTRY, ELSEVIER-SEQUOIA S.A. LAUSANNE, CH, vol. 561, no. 1-2, 30 June 1998 (1998-06-30), pages 37-47, XP004128630 ISSN: 0022-328X
- KIM I ET AL: "COPOLYMERIZATION OF ETHYLENE AND 1-DECENE BY METALLOCENES: DIRECT COMPARISON OF ME2C(CP)(FLU)ZRME2 WITH ET(CP)(FLU)ZRME2" POLYMER ENGINEERING & SCIENCE, SOCIETY OF PLASTICS ENGINEERS, US, vol. 41, no. 6, June 2001 (2001-06), pages 899-907, XP001089090 ISSN: 0032-3888

## Description

The present invention relates to a process for preparing a low molecular weight olefin (co)polymer in which ethylene is used as a main monomer, in a range of 100 to 250°C, and use of a polymerizing catalyst therefor, more particularly, a process for preparing a low molecular weight olefin (co)polymer having a narrow molecular weight distribution with the high productivity and use of a polymerizing catalyst therefor.

An olefin low molecular weight polymer such as a polyethylene wax is used in applications such as a pigment dispersant, a resin processing aid, a printing ink additive, a painting additive, a rubber processing aid and a fiber treating agent. In addition, an olefin low molecular weight polymer is also used in a toner releasing agent. Recently, from a viewpoint of energy saving, a low temperature fixing toner is sought, and appearance of a wax having the better releasability at a low temperature, that is, a wax having a low melting point even at the same composition and the same molecular weight is desired.

As a process for preparing such an olefin low molecular weight polymer, conventionally, a titanium catalyst has been usually used industrially. However, although there is an advantage that, in this catalyst system, a yield of a low molecular weight polymer per unit amount of a catalyst is high, and the productivity is high, it is necessary to maintain large a hydrogen partial pressure of the gaseous phase in a polymerizing system and, as a result, there is a drawback that an alkane as a side product is produced much.

Furthermore, a molecular weight distribution of the resulting low molecular weight polymer is wide and, in particular, in the case of a low molecular weight polymer having a molecular weight of 1000 or smaller, since the polymer is greatly sticky, it is difficult to use it in the aforementioned applications without removing a low molecular weight fraction.

As a method for improving these drawbacks, Japanese Patent Laid-Open Publication No. 210905/1984 proposes a process for preparing a low molecular weight polymer using a vanadium catalyst. This publication describes that a low molecular weight polymer having a narrow molecular weight distribution can be prepared under a low hydrogen partial pressure, as compared with a titanium catalyst. However, a molecular weight distribution is not necessarily sufficient. In addition, the present inventors propose a process for preparing an ethylene wax, comprising polymerizing ethylene, in the presence of a metallocene catalyst comprising (A) a transition metal compound selected from the group consisting of Group 4, Group 5 and Group 6 of periodic table, and (B) an aluminoxane, or polymerizing ethylene with an α-olefin in JP-A No. 60-78462. According to this process, an ethylene wax having a narrow molecular weight distribution can be prepared, but a process for preparing an ethylene wax having the further excellent productivity is desired.

Furthermore, Japanese Patent Laid-Open Publication No. 203410/1989 and Japanese Patent Laid-Open Publication No. 49129/1994 describe preparation of an ethylene wax using a metallocene catalyst comprising metallocene and aluminoxane. However, in these methods, the productivity is not necessarily sufficient. When a polymerizing temperature is raised, it becomes easy to remove the polymerization heat, and the productivity can be improved, but there is a problem that a yield of a low molecular weight polymer per unit weight of a catalyst is lowered.

EP 0 729 978 A1 describes a process for preparing a polymer of ethylene having a flow activation energy higher than that of a substantially linear ethylene polymer of the same molecular weight. The process involves using a bridged sandwich-bonded fluorenyl-containing metallocene.

WO 99/45042 relates to a process for olefin polymerization which comprises contacting under polymerization conditions one or more ethylenically unsaturated monomers with a catalyst composition comprising at least one organometallic transition metal compound activated to a cationic state and stabilizing, compatible non-coordinating Group 13 anionic complex having halogenated aromatic ligands in an essentially tetrahedral structure wherein the aromatic groups are polycyclic fused or pendant aromatic rings.

The present inventors have already proposed a process for preparing an ethylene wax, comprising (co)polymerizing ethylene in the presence of (A) a Group 4B transition metal compound containing a ligand having a cyclopentadienyl skeleton, (B) a compound which reacts with the (A) to form an ion pair, and (C) an organoaluminum compound in JP-A No. 8-239414. According to this process, an ethylene wax having a narrow molecular weight distribution can be prepared at a high production efficiency, but a process for preparing an ethylene wax further excellent in the productivity and the quality is desired.

Polymer Engineering & Science, 41(6), 899-907 (2001) compares copolymerization of ethylene and 1-decene using two different metallocences : Me₂C(Cp)(Flu)ZrMe₂ and Et(Cp)(Flu)ZrMe_{2.} US-B1-6469188 describes further metallocene catalyst systems for the polymerization of alkenes.

### DISCLOSURE OF THE INVENTION

The present inventors intensively studied in order to solve the aforementioned problems in the prior art and, as a result, found that a low molecular weight olefin (co) polymer having a narrow molecular weight distribution is obtained with the high productivity by polymerizing or copolymerizing an olefin in which ethylene is the main monomer, in a range of 100 to 250°C, in the presence of an olefin polymerizing catalyst containing a specific transition metal compound.

We found that, in the case of amainmonomer of ethylene, a low molecular weight olefin (co)polymer having a narrow molecular weight distribution and having a low melting point and a low intrinsic viscosity is obtained with the very high productivity when the aforementioned (co)polymerization is performed at a temperature of 100°C to 250°C.

The present invention provides a process for preparing a low molecular weight olefin (co)polymer having a narrow molecular weight distribution with the high productivity.

The present invention provides a low molecular weight olefin (co) polymer having a narrow molecular weight distribution with the high productivity, comprising polymerizing or copolymerizing an olefin in which ethylene is the main monomer, in a range of 100 to 250°C, in the presence of a polymerizing catalyst containing a specific transition metal compound.

The present invention provides use of an olefin polymerizing catalyst for preparing a low molecular weight olefin (co)polymer having a narrow molecular weight distribution in the presence of a specific transition metal compound with the high productivity.

More specifically, a process for preparing a low molecular weight olefin (co)polymer having a narrow molecular weight distribution with the high productivity in accordance with the present invention is :
a process for preparing a low molecular weight olefin (co)polymer, by homopolymerizing or copolymerizing an olefin in which ethylene is the main monomer, in a range of 100 to 250°C, in the presence of an olefin polymerizing catalyst, said catalyst comprising :
   (A) a Group 4 transition metal compound represented by the following general formulae (1) and (1') at same time and, (B) at least one compound selected from (B-1) an organometallic compound, (B-2) an organoaluminum compound, (B-3) an organoaluminum oxy-compound, and (B-4) a compound which reacts with the Group 4 transition metal compound (A) to form an ion pair; 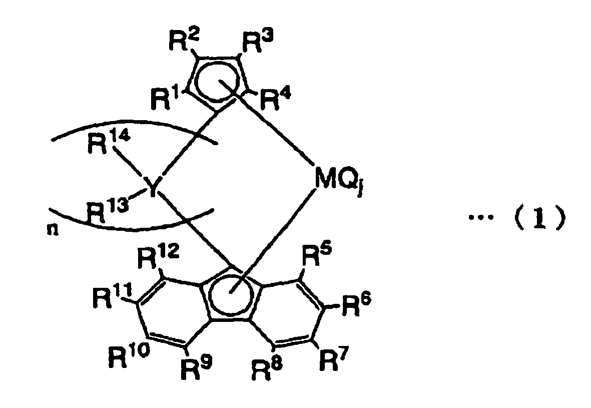
   wherein R¹, R², R³, R⁴, R⁵, R⁶, R⁷, R⁸, R⁹, R¹⁰, R¹¹, R¹², each R¹³ and each R¹⁴ are the same or different and are selected from hydrogen, a hydrocarbon group, and a silicon-containing group, or adjacent substituents of R¹ to R¹⁴ may be taken together to form a ring; M is Ti, Zr or Hf: each Y is the same or different and is a Group 14 atom; Q is selected from a halogen, a hydrocarbon group, a neutral conjugated or non-conjugated diene of 10 or less carbon atoms, an anionic ligand, and a neutral ligand which can be coordinated with a lone electron pair, wherein when two or more groups Q are present, each Q may be the same or different; n is an integer or 2 to 4; and j is an integer of 1 to 4, 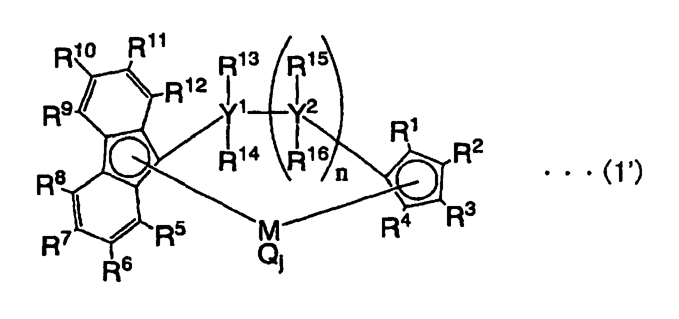 in the formula (1'), R¹, R², R³, R⁴, R⁵, R⁶, R⁷, R⁸, R⁹, R¹⁰, R¹¹ and R¹² are the same or different and are selected from a hydrogen atom, a hydrocarbon group, and a silicon-containing group; R¹³, R¹⁴ , each R¹⁵ and each R¹⁶ are the same or different and are selected from a hydrogen atom and a hydrocarbon group; or adjacent substituents of R⁵ to R¹² may be taken together to form a ring, R¹³ and R¹⁵ may be taken together to form a ring, or R¹³ and R¹⁵ may be taken together to form a ring and, at the same time, R¹⁴ and R¹⁶ may be taken together to form a ring; n is an integer of 1 to 3 and, when n is 1, R¹ to R¹⁶ are not all a hydrogen atom; Y¹ and Y² are a Group 14 atom, and may be the same or different from each other; M is Ti, Zr or Hf: Q is selected from a halogen, a hydrocarbon group, an anionic ligand and a neutral ligand which can be coordinated with a lone electron pair, wherein when two or more groups Q are present, each Q may be the same or different; and j is an integer of 1 to 4.

Also provided is the use of an olefin polymerizing catalyst for preparing a low molecular weight olefin (co) polymer by homopolymerizing or copolymerizing an olefin in which ethylene is used as a main monomer, in a range of 100 to 250°C, wherein the catalyst comprises:
(A) a Group 4 transition metal compound represented by the general formulae (1) and (1') as defined herein, and
(B) at least one compound selected from (B-1) an organometallic compound, (B-2) an organoaluminum compound, (B-3) an organoaluminum oxy-compound, and (B-4) a compound which reacts with the Group 4 transition metal compound (A) to form an ion pair.

A process for preparing a low molecular weight olefin (co)polymer, which comprises homopolymerizing or copolymerizing an olefin in which ethylene is used as a main monomer, in accordance with the present invention will be specifically explained below.

As used herein, the term "polymerization" includes not only homopolymerization but also copolymerization, and the term "polymer" includes not only a homopolymer but also a copolymer.

First, respective components constituting an olefin polymerizing catalyst used in the present invention will be explained.

### (A) Group 4 transition metal compound

Among components constituting an olefin polymerizing catalyst used in the present invention, (A) a Group 4 transition metal compound is represented by the following general formula (1).

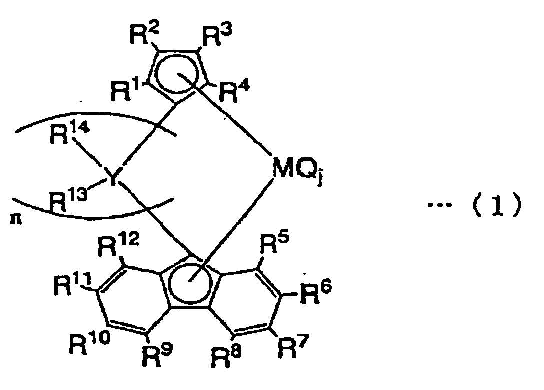

In the formula R¹, R², R³, R⁴, R⁵, R⁶, R⁷, R⁸, R⁹, R¹⁰, R¹¹, R¹², R¹³ and R¹⁴ may be the same or different from each other, and are selected from hydrogen, a hydrocarbon group and as silicon-containing group, adjacent substituents of R¹ to R¹⁴ may be taken together to form a ring, M is Ti, Zr or Hf, Y is a Group 14 atom, Q is selected in the same or different combination from the group consisting of a halogen, a hydrocarbon group, a neutral conj ugated or non-conjugated diene of 10 or smaller carbon atoms, an anionic ligand, and a neutral ligand which can be coordinated with a lone electron pair, n is an integer of 2 to 4, and j is an integer of 1 to 4.

In the above general formula (1), a hydrocarbon group is preferably an alkyl group of 1 to 20 carbon atoms, an arylalkyl group of 7 to 20 carbon atoms, an aryl group of 6 to 20 carbon atoms, or an alkylaryl group of 7 to 20 carbon atoms, and may contain one or more ring structures.

Examples thereof include methyl, ethyl, n-propyl, isopropyl, 2-methylpropyl, 1, 1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexylmethyl, cyclohexyl, 1-methyl-1-cyclohexyl, 1-adamantyl, 2-adamatyl, 2-methyl-2-adamantyl, menthyl, norbornyl, benzyl, 2-phenylethyl, 1-tetrahydronaphthyl, 1-methyl-1-tetrahydronaphthyl, phenyl, naphthyl and tolyl.

In the above general formula (1), a silicon-containing hydrocarbon group is preferably an alkyl-or arylsilyl group of 1 to 4 silicon atoms and 3 to 20 carbon atoms, and examples thereof include trimethylsilyl, tert-butyldimethylsilyl and triphenylsilyl.

In the present invention, R¹ to R¹⁴ in the above general formula (1) are selected from hydrogen, a hydrocarbon group and a silicon-containing hydrocarbon group, and may be the same or different from each other. Preferable examples of a-hydrocarbon group and a silicon-containing hydrocarbon group include those as described above.

Adjacent substituents of R¹ to R¹⁴ on a cyclopentadienyl ring in the above general formula (1) may be taken together to form a ring.

M in the general formula (1) is a Group 4 element of periodic table, that is, zirconium, titanium or hafnium, preferably zirconium.

Y is a Group 14 atom, preferably a carbon atom or a silicon atom, and n is an integer of 2 to 4, preferably 2 or 3, particularly preferably 2.

Q is selected in the same or different combination from the group consisting of a halogen, a hydrocarbon group, a neutral conj ugated or non-conjugateddiene of 10 or smaller carbon atoms, an anionic ligand and a neutral ligand which can be coordinated with a lone electron pair. When Q is a hydrocarbon group, it is more preferably a hydrocarbon group of 1 to 10 carbon atoms.

Examples of a halogen include fluorine, chlorine, bromine and iodine, and examples of a hydrocarbon group include methyl, ethyl,n-propyl, isopropyl,2-methylpropyl,1,1-dimethylpropyl, 2,2-dimethylpropyl, 1,1-diethylpropyl; 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexylmethyl, cyclohexyl and 1-methyl-1-cyclohexyl. Examples of a neutral conj ugated or non-conjugated diene of 10 or smaller carbon atoms include s-cis- or s-trans-η⁴-1,3-butadiene, s-cis- or s-trans-η⁴-1,4-diphenyl-1,3-butadiene, s-cis- or s-trans-η⁴-3-methyl-1,3-pentadiene, s-cis- or S-trans-η⁴-1,4-dibenzyl-1',3-butadiene, s-cis- or s-trans-η⁴-2,4-hexadiene, s-cis- or s-trans-η⁴-1,3-pentadiene, s-cis- or s-trans-η⁴-1,4-ditolyl-1,3-butadiene and s-cis- or s-trans- η⁴-1,4-bis(trimethylsilyl)-1,3-butadiene. Examples of an anionic ligand include an alkoxy group such as methoxy, tert-butoxy or phenoxy, a carboxylate group such as acetate or benzoate, a sulfonate group such as mesylate or tosylate. Examples of a neutral ligand which can be coordinated with a loan electron pair include an organophosphorus compound such as trimethylphosphine, triethylphosphine, triphenylphosphine and diphenylmethylphosphine, and ethers such as tetrahydrofuran, diethyl ether, dioxane and 1,2-dimethoxyethane. When j is an integer of 2 or larger, plural Q's may be the same or different from each other.

In the formula (1), plural (2 to 4) Y's are present, and plural Y-'s may be the same or different from each other. Plural R¹³'s and plural R¹⁴'s which bind to Y may be the same or different from each other. For example, plural R¹³'s which bind to the same Y may be different, or plural R¹³'s which bind to different Y's may be the same. Further, R¹³'s or R¹⁴'s may be taken together to form a ring.

The Group 4 transition metal compound for use in the present invention is represented by the formula (1) and by the following formula (1') at the same time:

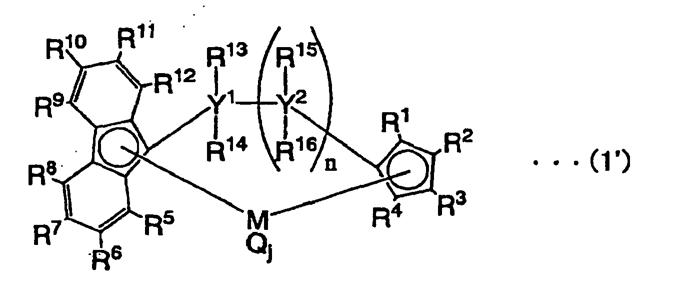

In the formula (1'), R¹, R², R³, R⁴, R⁵, R⁶, R⁷, R⁸, R⁹, R¹⁰, R¹¹, and R¹² may be the same or different from each other, and are selected from a hydrogen atom, a hydrocarbon group and a silicon-containing group, R¹³, R¹⁴, R¹⁵ and R¹⁶ are a hydrogen atom or a hydrocarbon group, n is an integer of 1 to 3 and, when n is 1, the R¹ to R¹⁶ are not a hydrogen atom at the same time, and may be the same or different from each other. Adjacent substituents of R⁵ to R¹² may be taken together to form a ring, R¹³ and R¹⁵ may be taken together to form a ring, or R¹³ and R¹⁵ may be taken together to form a ring and, at the same time, R¹⁴ and R¹⁶ may be taken together to form a ring, Y¹ and Y² may be the same or different from each other, and are a Group 14 atom, M is Ti , Zr or Hf, Q is selected in the same or different combination from a halogen, a hydrocarbon group, an anionic ligand and a neutral ligand which can be coordinated with a lone electron pair, and j is an integer of 1 to 4.

In a Group 4 transition compound represented by the general formula (1'), an order arranging Y¹ and singular or plural Y²' (s) may be arbitrarily selected in spite of the above formula.

Examples of Group 4 transition metal compounds represented by the above general formula (1) and (1') will be shown below. A ligand structure of Group 4 transition metal compounds represented by the general formulas (1) and (1') except for MQⱼ (metal part) is divided into three of Cp (cyclopentadienyl ring part), Bridge (bridging part) and Flu (fluorenyl ring part) for expression, and examples of respective partial structures and examples of a ligand structure in a combination thereof will be shown below. In examples of Cp and Bridge, points represented by a black circle ( ) represent points connecting with Bridge and Cp, respectively.

### [Examples of Cp]

| | | | | | | | | | | |
|---|---|---|---|---|---|---|---|---|---|---|
| 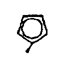 | a1 | | 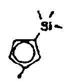 | a5 | | 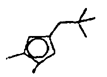 | a9 | | 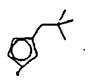 | a13 |
| 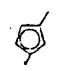 | a2 | | 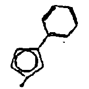 | a6 | | 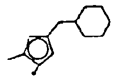 | a10 | | 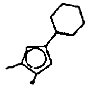 | a14 |
| 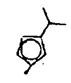 | a3 | | 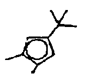 | a7 | | 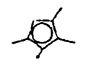 | a11 | | | |
| 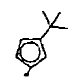 | a4 | | 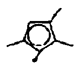 | a8 | | 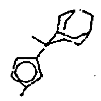 | a12 | | | |

### [Examples of Bridge]

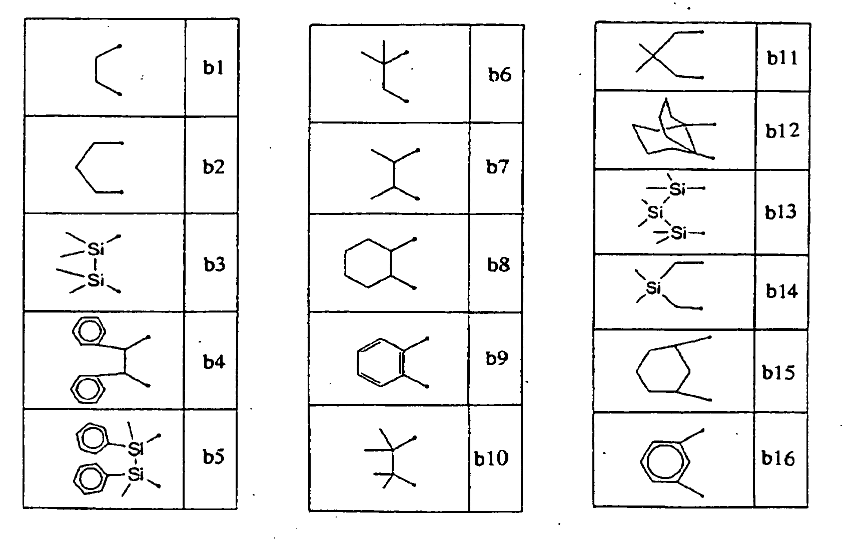

### [Examples of Flu]

| | | | | |
|---|---|---|---|---|
| 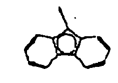 | C1 | | 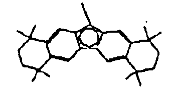 | C6 |
| 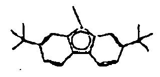 | C2 | | 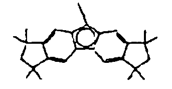 | C7 |
| 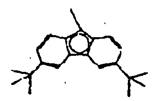 | C3 | | 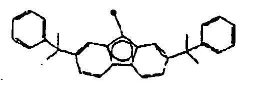 | C8 |
| 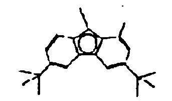 | C4 | | 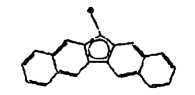 | C9 |
| 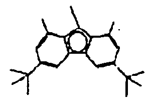 | C5 | | 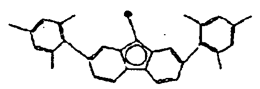 | C10 |

The above-exemplified Cp (cyclopentadienyl ring part), Bridge (bridging part) and Flu (fluorenyl ring part) may be combined arbitrarily, and combinations of selected Cp, Bridge and Flu are specific examples of a ligand structure. For example, when a ligand structure is a combination of a1-b1-c2, and MQⱼ of a metal part is ZrCl₂, the following metallocene compound is exemplified.

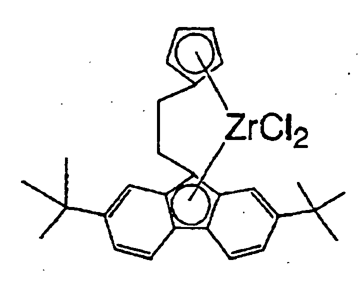

Examples of MQⱼ in the above general formula (I) include ZrCl₂, ZrBr₂, ZrMe₂, ZrEt₂, Zr(n-Pr)₂, ZrMeEt, ZrClMe, ZrBrMe, Zr(s-trans-η⁴-1, 3-butadiene), Zr(s-trans-η⁴-1,4-Ph₂-1, 3-butadiene), Zr(s-trans-η⁴-3-Me-1,3-pentadiene), Zr(s-trans-η⁴-1,4-(CH₂Ph)₂-1,3-butadiene), Zr(s-trans-η⁴-2,4-hexadiene), Zr(s-trans-η⁴-1,3-pentadiene), Zr(s-trans-η⁴-1,4-(p-tol)₂-1,3-butadiene), Zr(s-trans-η⁴-1,4-(SiMe₃)₂-1,3-butadiene), Zr(s-cis-η⁴-1,3-butadiene), Zr(s-cis-η⁴-1,4-Ph₂-1,3-butadiene), Zr(s-cis-η⁴-3-Me-1,3-pentadiene), Zr(s-cis-η⁴-1,4-(CH₂Ph)₂-1,3-butadiene), Zr(s-cis-η⁴-2,4-hexadiene), Zr(s-cis-η⁴-1,3-pentadiene), Zr(s-cis-η⁴-1,4-(p-tol)2-1,3-butadierie), Zr(s-cis-η⁴-1,4-(SiMe₃)₂-1,3-butadiene), Zr(OTs)₂, Zr(OMs)₂, and Zr (OTf)₂ and compounds in which these transition metals are changed from zirconium to titanium or hafnium.

### (B-1) Organometallic compound

As the (B-1) organometallic compound used in the present invention, specifically,thefollowing organometallic compound is used.

Dialkyl compound of a Group 2 or Group 12 metal of periodic table represented by :

General formula R^{a}R^{b}M³

(wherein R^{a} and R^{b} may be the same or different from each other, and represent a hydrocarbon group of 1 to 15, preferably 1 to 4 carbon atoms, and M³ is Mg, Zn or Cd)
These organometallic compounds (B-1) may be used alone or in combination of two or more of them.

### (B-2) Organoaluminum compound

Examples of the (B-2) organoaluminum compound constituting an olefin polymerizing catalyst include organoaluminum compounds represented by the following general formula (7) , alkylated complexes of a Group 1 metal and aluminum represented by the following general formula (8).

Organoaluminum compounds represented by :

R^{a}ₘAl (OR^{b})ₙHₚX_{q} (7)

(wherein R^{a} and R^{b} may be the same or different from each other, and represent a hydrocarbon group of 1 to 15, preferably 1 to 4 carbon atoms, X represents a halogen atom, m is a number of 0 < m ≤ 3, n is a number of 0 ≤ n < 3, p is a number of 0 ≤ p < 3, q is a number of 0 ≤ q ≤ 3, and m+n+p+q=3) Examples of such the compound include trimethylaluminum, triethylaluminum, triisobutylaluminum, and diisobutylaluminum hydride.

Alkylated complexes of a Group 1 metal of periodic table and aluminum represented by :

m²AlR^{a}₄ (8)

(wherein M² represents Li, Na or K, and R^{a} represents a hydrocarbon group of 1 to 15, preferably 1 to 4 carbon atoms)
Examples of such the compound include LiAl (C₂H₅)₄, and LiAl (C₇H₁₅)₄.

Examples of the organoaluminum compound represented by the above general formula (7) include compounds represented by the following general formula (9), (10), (11) or (12).

R^{a}ₘAl (Or^{b})₃₋ₘ (9)

R^{a}ₘAl(Or^{b})₃₋ₘ · · · (9) (wherein R^{a} and R^{b} may be the same or different from each other, and represent a hydrocarbon group of 1 to 15, preferably 1 to 4 carbon atoms, and m is preferably a number of 1.5 ≤ m ≤ 3)

R^{a}ₘAlX₃₋ₘ (10)

(wherein R^{a} represents a hydrocarbon group of 1 to 15, preferably 1 to 4 carbon atoms, X represents a halogen atom, and m is preferably 0 < m < 3)

R^{a}ₘAlX₃₋ₘ (11)

(wherein R^{a} represents a hydrocarbon group of 1 to 15, preferably 1 to 4 carbon atoms, m is preferably 2 ≤ m < 3)

R^{a}ₘAlX (OR^{b})ₙXq (12)

(wherein R^{a} and R^{b} may be the same or different from each other, and represent a hydrocarbon group of 1 to 15, preferably 1 to 4 carbon atoms, X represents a halogen atom, m is a number of 0 < m ≤ 3, n is a number of 0 ≤ n < 3, q is a number of 0 ≤ q < 3, and m+n+q=3)

More specific examples of aluminum compounds represented by the above general formula (9), (10), (11) or (12) include tri-n-alkylaluminum such as trimethylaluminum, triethylaluminum, tri-n-butylaluminum, tripropylaluminum, tripentylaluminum, trihexylaluminum, trioctylaluminum, and tridecylaluminum; tri-branched alkylaluminum such as triisopropylaluminum, triisobutylaluminum, tri-sec-butylaluminum, tri-tert-butylaluminum, tri-2-methylbutylaluminum, tri-3-methylbutylaluminum, tri-2-methylpentylaluminum, tri-3-methylpentylaluminum, tri-4-methylpentylaluminum, tri-2-methylhexylaluminum, tri-3-methylhexylaluminum, and tri-2-ethylhexylaluminum; tricycloalkylaluminum such as tricyclohexylaluminum, and tricyclooctylaluminum; triarylaluminum such as triphenylaluminum, and tritolylaluminum; dialkylaluminum hydride such as diisopropylaluminum hydride, and diisobutylaluminum hydride ; alkenylaluminum such as isoprenylaluminum represented by the general formula (i-C₄H₉)ₓAl_{y}(C₅H₁₀)_{z} (wherein x, y and z are a positive number, and z ≤2x); alkylaluminum alkoxide such as isobutylaluminum methoxide, isobutylaluminum ethoxide, and isobutylaluminum isopropoxide; dialkylaluminum alkoxide such as dimethylaluminium methoxide, diethylaluminium ethoxide, and dibutylaluminium butoxide; alkylaluminium sesquialkoxide such as ethylaluminium sesquiethoxide, and butylaluminium sesquibutoxide; partially alkoxylated alkylaluminium having the average composition represented by the general formula R^{a}₂. ₅Al(OR^{b})_{0.5}; alkylaluminum aryloxide such as diethylaluminum phenoxide, diethylaluminium (2,6-di-t-butyl-4-methylphenoxide), ethylaluminium bis(2,6-di-t-butyl-4-methylphenoxide), diisobutylaluminum (2,6-di-t-butyl-4-methylphenoxide), and isobutylaluminum bis(2,6-di-t-butyl-4-methylphenoxide); dialkylaluminum halide such as dimethylaluminum chloride, diethylaluminum chloride, dibutylaluminum chloride, diethylaluminum bromide, and diisobutylaluminum chloride; alkylaluminum sesquihalide such as ethylaluminum sesquichloride, butylaluminum sesquichloride, and ethylaluminum sesquichloride; partially halogenated alkylaluminum such as alkylaluminum dihalide such as ethylaluminum dichloride, propylaluminum dichloride, and butylaluminum dibromide; dialkylaluminum hydride such as diethylaluminum hydride, and dibutylaluminum hydride; other partially hydrogenated alkylaluminum such as alkylaluminum dihydride such as ethylaluminum dihydride, and propylaluminum dihydride; and partially alkoxylated and halogenated alkylaluminum such as ethylaluminum ethoxychloride, butylaluminum butoxychloride,and ethylaluminum ethoxybromide.

Alternatively, compounds similar to the compounds represented by the above general formula (7) may be used, and examples thereof include organoaluminum compounds in which two or more aluminum compounds are bound via a nitrogen atom. Specific examples of such the compound include

(C₂H₅)₂AlN (C₂H₅) Al (C₂H₅)₂.

Examples of the compounds represented by the above general formula (8) include LiAl(C₂H₅)₄, and LiAl(C₇H₁₅)₄.

Alternatively, compounds from which the above organoaluminum compound is formed in the polymerization system, for example, a combination of halogenated aluminum and alkyllithium, or a combination of halogenated aluminum and alkylmagnesium may be used.

Among them, organoaluminum compounds are preferable.

Organoaluminum compounds represented by the above general formula (7), or alkylated complexes of a Group 1 metal and aluminum represented by the above general formula (8) may be used alone or in combination of two or more of them.

### (B-3) Organoaluminum oxy-compound

(B-3) The organoaluminum oxy-compound used in the present invention may be the conventionally known aluminoxane, or may be the benzene-insoluble organoaluminum oxy-compound exemplified in Japanese Patent Laid-Open Publication No. 78687/1990.

The conventionally known aluminoxane can be prepared, for example, by the following method, and is usually obtained as a solution in a hydrocarbon solvent.
(1) A method of adding an organoaluminum compound such as trialkylaluminum to a suspension of a compound having absorbed water or salts containing water of crystallization, for example, magnesium chloride hydrate, copper sulfate hydrate, aluminum sulfate hydrate, nickel sulfate hydrate, and cereus chloride hydrate in a hydrocarbon medium, to react an organoaluminum compound with absorbed water or crystallization water.
(2) A method of reacting water, ice or water steam directly with an organoaluminum compound such as trialkylaluminum in a medium such as benzene, toluene, ethyl ether, and tetrahydrofuran.
(3) A method of reacting an organoaluminum compound such as trialkylaluminum with an organotin oxide such as dimethyltin oxide, and dibutyltin oxide in a medium such as decane, benzene, and toluene.

The aluminoxane may contain a small amount of an organometallic component. Alternatively, a solvent or an unreacted organoaluminum compound is distilled off from a recovered solution of the aluminoxane, and may be redissolved in a solvent or may be suspended in a poor solvent for aluminoxane.

Examples of an organoaluminum compound used upon preparation of aluminoxane include the same organoaluminum compounds as those exemplified as the organoaluminum compound belonging to the above (B-2).

Among them, trialkylaluminum, and tricycloalkylaluminum are preferable, and trimethylaluminum is particularly preferable.

The aforementioned organoaluminum compounds may be used alone or in combination of two or more of them.

In addition, as the benzene-insoluble organoaluminum oxy-compound used in the present invention, those compounds in which an Al component soluble in benzene at 60°C is usually 10% or smaller, preferably 5% or smaller, particularly preferably 2% or smaller in terms of Al atom, that is, those compounds which is insoluble or hardly soluble in benzene are preferable. These organoaluminum oxy-compounds (B-3) are used alone or in combination of two or more of them.

Aluminoxane prepared from trimethylaluminum is called methylaluminoxane or MAO, and is a compound which is used particularly frequently.

Examples of a solvent used for preparing aluminoxane include aromatic hydrocarbons such as benzene, toluene, xylene, cumene, and cymene, aliphatic hydrocarbons such as pentane, hexane, heptane, octane, decane, dodecane, hexadecane, and octadecane, alicyclic hydrocarbons such as cyclopentane, cyclohexane, cycloctane, methylcyclopentane, petroleum fractions such as gasoline, kerosene, and gas oil, and halides of the aforementioned aromatic hydrocarbons, aliphatic hydrocarbons, and alicycilc hydrocarbons, inter alia, chlorinated or brominated hydrocarbon solvents. Furthermore, ethers such as ethyl ether, and tetrahydrofuran may be used. Among these solvents, aromatic hydrocarbons or aliphatic hydrocarbons are particularly preferable.

Examples of the organoaluminum oxy-compound used in the present invention also include organoaluminum oxy-compounds represented by the following general formula (13). 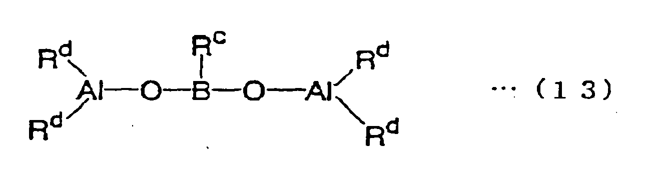 (wherein R^{c} represents a hydrocarbon group of 1 to 10 carbon atoms, and R^{d}'S may be the same or different from each other, and represent a hydrogen atom, a halogen atom or a hydrocarbon group of 1 to 10 carbon atoms)

The organoaluminum oxy-compound containing boron represented by the above general formula (13) can be prepared by reacting alkylboronic acid represented by the following general formula (14) and an organoaluminum compound at a temperature of -80°C to room temperature for 1 minute to 24 hours in an inert solvent under the inert gas atmosphere.

R^{c}B(OH)₂ (14)

(wherein R^{c} is as defined above)

Examples of alkylboronic acid represented by the above general formula (14) include methylboronic acid, ethylboronic acid, isopropylboronic acid, n-propylboroinc acid, n-butylboronic acid, isobutylboronic acid, n-hexylboronic acid, cyclohexylboronic acid, phenylboronic acid, 3,5-difluorophenylboronic acid, pentafluorophenylboronic acid, and 3,5-bis(trifluoromethyl)phenylboronic acid. Among them, methylboronic acid, n-butylboronic acid, isobutylboronic acid, 3,5-difluorophenylboronic acid, and pentafluorophenylboronic acid are preferable. These are used alone or in combination of two or more of them.

Examples of an organoaluminum compound to be reacted with such the alkylboronic acid include the same organoaluminum compounds as those exemplified as the organoaluminum compound represented by the above general formula (7) or (8).

Among them, trialkylaluminum, and tricycloalkylaluminum are preferable, and trimethylaluminum, triethylaluminum, and triisobutylaluminum are particularly preferable. These are used alone or in combination of two or more of them.

### (B-4) Compound which reacts with the aforementioned Group 4. transition metal compound (A) to form an ion pair

Examples of the compound (B-4) which reacts with the aforementioned Group 4 transition metal compound (A) to form an ion pair include Lewis acid, an ionic compound, a borane compound and a carborane compound described in Japanese Patent Laid-Open Publication No. 1-501950/1989, Japanese Patent Laid-Open Publication No. 502036/1989, Japanese Patent Laid-Open Publication No. 179005/1991, Japanese Patent Laid-Open Publication No. 179006/1991, Japanese Patent Laid-Open Publication No. 207703/1991, Japanese Patent Laid-OpenPublicationNo. 207704/1991, and US Patent No. 5321106.

Examples of the Lewis acid include compounds represented by BR₃ (R is a phenyl group optionally having a substituent such as fluorine, a methyl group and a trifluoromethyl group, fluorine, or an alkyl group such as a methyl group and an isobuthyl group) such as trifluoroboron, triphenylboron, tris(4-fluorophenyl)boron, tris(3,5-difluorophenyl)boron, tris(4-fluoromethylphenyl)boron, tris(pentafluorophenyl)boron, tris(p-tolyl)boron, tris(o-tolyl)boron, tris(3,5-dimethylphenyl)boron, trimethylboron, and triisobutylboron.

Examples of the ionic compounds include compounds represented by the following general formula (2):

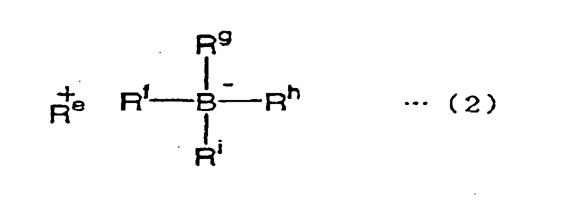

In the formula, examples of R^{e+} include H⁺, carbenium cation, oxonium cation, ammonium cation, phosphonium cation, cyclopentyltrienyl cation, and ferrocenium cation having a transition metal. R^{f} to Rⁱ may be the same or different from each other, and are an organic group, preferably an aryl group or a substituted aryl group.

Examples of the carbenium cation include tri-substituted carbenium cations such as triphenylcarbenium cation, tris(methylphenyl)carbenium cation, and tris(dimethylphenyl)carbenium cation.

Examples of the ammonium cation include trialkylammonium cations such as trimethylammonium cation, triethylammonium cation, tri(n-propyl)ammonium cation, triisopropylammonium cation, tri (n-butyl) ammonium cation, and triisobutyl ammonium cation, N,N-dialkylanilinium cations such as N,N-dimethylaniliniumcation,N,N-diethylanilinium cation, and N,N-2,4,6-pentamethylanilinium cation, and dialkylammonium cations such as diisopropylammonium cation, and dicyclohexylammonium cation.

Examples of the phosphonium cation include triarylphosphonium cations such as triphenylphosphonium cation, tris(methylphenyl)phosphonium cation, and tris(dimethylphenyl)phosphonium cation.

Among the foregoing, as R^{e}, carbenium cation and ammonium cation are preferable, and triphenylcarbenium cation, N,N-dimethylanilinium cation and N,N-diethylanilinium cation are particularly preferable.

Examples of a carbenium salt include triphenylcarbenium tetraphenylborate, triphenylcarbenium tetrakis(pentafluorophenyl)borate, triphenylcarbenium tetrakis(3,5-ditrifluoromethylphenyl)borate, tris(4-methylphenyl)carbenium tetrakis(pentafluorophenyl)borate, and tris(3,5-dimethylphenyl)carbenium tetrakis(pentafluorophenyl)borate.

Examples of an ammonium salt include a trialkyl-substituted ammonium salt, a N,N-dialkylanilinium salt, and a dialkylammonium salt.

Examples of a tri-alkyl substituted ammonium salt include triethylammonium tetraphenylborate, tripropylammonium tetraphenylborate, tri(n-butyl)ammonium tetraphenylborate, trimethylammonium tetrakis (p-tolyl) borat-e, trimethylammonium tetrakis(o-tolyl)borate, tri(n-butyl)ammonium tetrakis(pentafluorophenyl)borate, triethylammonium tetrakis(pentafluorophenyl)borate, tripropylammonium tetrakis(pentafluorophenyl)borate, tripropylammonium tetrakis(2,4-dimethylphenyl)borate, tri(n-butyl)ammonium tetrakis(3,5-dimethylphenyl)borate, tri(n-butyl)ammonium tetrakis(4-trifluoromethylphenyl)borate, tri(n-butyl)ammonium tetrakis(3,5-ditrifluoromethylphenyl)borate, tri(n-butyl)ammonium tetrakis(o-tolyl)borate, dioctadecylmethylammonium tetraphenylborate, dioctadecylmethylammonium tetrakis(p-tolyl)borate, dioctadecylmethylammonium tetrakis(o-tolyl)borate, dioctadecylmethylammonium tetrakis(pentafluorophenyl)borate, dioctadecylmethylammonium tetrakis(2,4-dimethylphenyl)borate, dioctadecylmethylammonium tetrakis(3,5-dimethylphenyl)borate, dioctadecylmethylammonium tetrakis(4-trifluoromethylphenyl)borate, dioctadecylmethylammonium tetrakis(3,5-ditrifluoromethylphenyl)borate, and dioctadecylmethylammonium.

Examples of the N,N-dialkylanilinium salt include N,N-dimethylanilinium tetraphenylborate, N,N-dimethylanilinium tetrakis(pentafluorophenyl)borate, N,N-dimethylanilinium tetrakis(3,5-ditrifluoromethylphenyl)borate, N,N-diethylanilinium tetraphenylborate, N,N-diethylanilinium tetrakis(pentafluorophenyl)borate, N,N-diethylanilinium tetrakis(3,5-ditrifluoromethylphenyl)borate, N,N-2,4,6-pentamethylanilinium tetraphenylborate, and N,N-2,4,6-pentamethylanilinium tetrakis(pentafluorophenyl)borate.

Examples of the dialkylammonium salt include di(1-propyl)ammonium tetrakis(pentafluorophenyl)borate, and dicyclohexylammonium tetrafluoroborate.

Further examples include ferrocenium tetrakis(pentafluorophenyl)borate, triphenylcarbenium pentaphenylcyclopentadienyl complex, N,N-diethylanilinium pentaphenylcyclopentadienyl complex, borate compounds represented by the following formula (3) or (4) , borate compounds containing active hydrogen represented by the following formula (5) , and borate compounds containing a silyl group represented by the following formula (6). 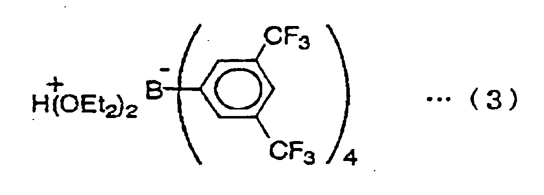 (wherein Et represents an ethyl group)

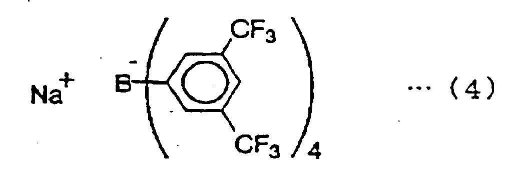

[B-Qₙ(G_{q}(T-H)ᵣ)_{z}]⁻A⁺ (5)

In the formula (5) , B represents boron. G represents a multi-bond hydrocarbon radical, examples of a preferable multi-bond hydrocarbon include alkylene including 1 to 20 carbon atoms, allylene, ethylene, and alkalylene radicals, and preferable examples of G include phenylene, bisphenylene, naphthalene, methylene, ethylene, propylene, 1,4-butadiene, and p-phenylenemethylene. The multi-bond radical G is in a manner of r+1 binding, that is, one bond binds to a borate anion, and other bonds r of G binds to a (T-H) group. A⁺ is a cation.

T in the above formula (5) represents O, S, NR³, or PR^{j}, R^{j} represents a hydrocarbanyl radical, a trihydrocarbanylsilyl radical, a trihydrocarbanylgermanium radical, or hydride, and q is an integer of 1 or larger, preferably 1. Examples of the T-H group include -OH, -SH, -NRH, and -PR^{j}H, wherein R^{j} is a hydrocarbinyl radical of 1 to 18 carbon atoms, preferably 1 to 10 carbon atoms, or hydrogen. Examples of preferable R^{j} group include alkyl,cycloalkyl,allyl,and allylalkyl,and alkylallyl having 1 to 18, carbon atoms. -OH, -SH, -NR^{j}H or -PR^{j}H may be, for example, -C(O)-OH, -C(S), -SH-C(O) -NR^{j}H, or C (O) -PR^{j}H. The most preferable group having active hydrogen is a -OH group. Q is hydride, or dihydrocarbylamide, preferably dialkylamide, halide, hydrocarbyl oxide, alkoxide, allyloxide, hydrocarbyl, or substituted hydrocarbyl radical. Wherein, n+z is 4.

Examples of [B-Qₙ(Gq(T-H)ᵣ)_{z}] of the above formula (5) include triphenyl(hydroxyphenyl)borate, diphenyl-di(hydroxyphenyl)borate, triphenyl(2,4-dihydroxyphenyl)borate, tri(p-tolyl)(hydroxyphenyl)borate, tris(pentafluorophenyl)(hydroxyphenyl)borate, tris(2,4-dimethylphenyl)(hydroxyphenyl)borate, tris(3,5-dimethylphenyl)(hydroxyphenyl)borate, tris[3,5-di(trifluoromehyl)phenyl](hydroxyphenyl)borate, tris(pentafluorophenyl)(2-hydroxyethyl)borate, tris(pentafluorophenyL)(4-hydroxybutyl)borate, tris(pentafluorophenyl)(4-hydroxycyclohexyl)borate, tris(pentafluorophenyl)[4-(4-hydroxyphenyl)phenyl]borate, and tris(pentafluorophenyl)(6-hydroxy-2-naphthyl)borate. Most preferable is tris(pentafluorophenyl)(4-hydroxyphenyl)borate. Further, the aforementioned borate compounds in which an OH group is substituted with -NHR^{j} (wherein R^{j} is methyl, ethyl, or t-butyl) are also preferable.

Examples of A⁺ which is a countercation of a borate compound include a carbonium cation, a tropylium cation, an ammonium cation, an oxonium cation, a sulfonium cation, and a phosphonium cation. Further examples include positive ions of metals which themselves are easily reduced, and positive ions of organometallics. Examples of these cations include a triphenylcarbonium ion, a diphenylcarbonium ion, a cycloheptatrinium, indenium, triethylammonium, tripropylammonium, tributylammonium, dimethylammonium, dipropylammonium, dicyclohexylammonium, trioctylammonium, N,N-dimethylammonium, diethylammonium, 2,4,6-pentamethylammonium, N,N-dimethylphenylammonium, di-(i-propyl)ammonium, dicyclohexylammonium, triphenylphosphonium, triphosphonium, tridimethylphenylphosphonium, tri(methylphenyl)phosphonium, a triphenylphosphonium ion, a triphenyloxonium ion, a triethyloxonium ion, pyrinium, a silver ion, a gold ion, a platinum ion, a copper ion, a palladium ion, a mercury ion, and a ferrocenium ion. Inter alia, an ammonium ion is preferable.

[B-Qₙ(G_{q}(SᵢR^{k}R^{l}R^{m})ᵣ)_{z}]⁻A⁺ (6)

In the formula (6) , B represents boron. G represents a multi-bond hydrocarbon radical, preferable examples of the multi-bond hydrocarbon include alkylene, allylene, ethylene, and alkalylene radicals of 1 to 20 carbon atoms, and preferable examples of G include phenylene, bisphenylene, naphthalene, methylene, ethylene, propylene, 1,4-butadiene, and p-phenylenemethylene. The multi-bond radical G binds in a manner of r+1 binding, that is, one bond binds to a borate anion, and other bonds r bind to a (SiR^{k}R^{l}R^{m}) group. A⁺ is a cation.

R^{k}, R^{l} and R^{m} in the above general formula represent a hydrocarbanyl radical, a trihydrocarbanylsilyl radical, a trihydrocarbanylgermanium radical, a hydrogen radical, an alkoxy radical, a hydroxyl radical or a halogen compound radical. R^{k}, R^{l} and R^{m} may be the same or independent. Q is hydride, or dihydrocarbylamide, preferably dialkylamide, halide, hydrocarbyl oxide, alkoxide, allyl oxide, hydrocarbyl, or substituted hydrocarbyl radical, more preferably pentafluorobenzyl radical. Wherein n+z is 4.

Examples of [B-Qₙ(G_{q}(SᵢR^{k}R^{l}R^{m})ᵣ)_{z}]⁻ in the above formula (6) include triphenyl (4-dimethylchlorosilylphenyl)borate, diphenyl-di(4-dimethylchlorosilylphenyl)borate, triphenyl(4-dimethylmethoxysilylphenyl)borate, tri(p-tolyl)(4-triethoxysilylphenyl)borate, tris(pentafluorophenyl)(4-dimethylchlorosilylphenyl)borate, tris(pentafluorophenyl)(4-dimethylmethoxysilylphenyl)borate, tris(pentafluorophenyl)(4-trimethoxysilylphenyl)borate, and tris(pentafluorophenyl)(6-dimethylchlorosilyl-2-naphthyl)bo rate.

Examples of A⁺ which is a countercation of a borate compound include the same A⁺'s as those in the above formula (5).

Examples of the borane compound include salt of anions such as decaborane (14) , bis [tri (n-butyl) ammonium] nonaborate, bis[tri(n-butyl)ammonium]decaborate, bis[tri(n-butyl)ammonium]undecaborate, bis[tri(n-butyl)ammonium]dodecaborate, bis[tri(n-butyl)ammonium]decachlorodecaborate, and bis[tri(butyl)ammonium]dodecachlorododecaborate, and salts of metal boran anions such as tri(n-butyl)ammonium bis(dodecahydridedodecaborate)cobaltate (III), and bis[tri(n-butyl)ammonium] bis(dodecahydridedodecaborate)nickelate (III).

Examples of the carborane compound include salts of anions such as 4-carbanonaborane(14), 1,3-dicarbanonaborane(13), 6,9-dicarbadecaborane(14), dodecahydride-1-phenyl-1,3-dicarbanonaborane, dodecahydride-1-methyl-1,3-dicarbanonaboarne, undecahydride-1,3-dimethyl-1,3-dicarbanonaborane,' 7,8-dicarbaundecaborane(13), 2,7-dicarbaundecaborane(13), undecahydride-7,8-dimethyl-7,8-dicarbaundecaborane, dodecahydride-11-methyl-2,7-dicarbaundecaborane, tri(n-butyl)ammonium 1-carbadodecaborate, tri(n-butyl)ammonium 1-carbaundecaborate, tri(n-butyl)ammonium 1-carbadodecaborate, tri(n-butyl)ammonium 1-trimethylsilyl-1-carbadecaborate, tri(n-butyl)ammonium bromo-1-carbadodecaborate, tri(n-butyl)ammonium 6-carbadecaborate(14), tri(n-butyl)ammonium 6-carbadecaborate(12), tri(n-butyl)ammonium 7-carbaundecaborate(13), tri(n-butyl)ammonium 7,8-dicarbaundecaborate(12), tri(n-butyl)ammonium 2,9-dicarbaundecaborate(12), tri (n-butyl) ammonium dodecahydride-8-methyl-7,9-dicarbaundecaborate, tri (n-butyl) ammonium undecahydride-8-ethyl-7,9-dicarbaundecaborate, tri (n-butyl) ammonium undecahydride-8-butyl-7,9-dicarbaundecaborate, tri(n-butyl)ammonium undecahydride-8-allyl-7,9-dicarbaundecaborate, tri (n-butyl) ammonium undecahydride-9-trimethylsilyl-7,8-dicarbaundecaborate, and tri(n-butyl)ammonium undecahydride-4,6-bromo-7-carbaundecaborate; and salts of metal carborane anions such as tri(n-butyl)ammonium bis(nonahydride-1,3-dicarbanonaborate)cobaltate(III), tri (n-butyl) ammonium bis(undecahydride-7,8-dicarbaundecaborate)ferrate(III), tri (n-butyl) ammonium bis(undecahydride-7,8-dicarbaundecaborate)cobaltate(III), tri(n-butyl)ammonium bis(undecahydride-7,8-dicarbaundecaborate)nickelate(III), tri (n-butyl) ammonium bis(undecahydride-7,8-dicarbaundecaborate)cuprate(III), tri (n-butyl) ammonium bis(undecahydride-7,8-dicarbaundecaborate)aurate(III)., tri (n-butyl) ammonium bis(nonahydride-7,8-dimethyl-7,8-dicarbaundecaborate)ferrat e (III), tri(n-butyl)ammonium bis(nonahydride-7,8-dimethyl-7,8-dicarbaundecaborate)chroma te(III), tri(n-butyl)ammonium bis(tribromooctahydride-7,8-dicarbaundecaborate)cobaltate (III), tris[tri(n-butyl)ammonium] bis(undecahydride-7-carbaundecaborate)chromate(III), bis[tri(n-butyl)ammonium] bis(undecahydride-7-carbaundecaborate)manganate(IV), bis[tri(n-butyl)ammonium]bis(undecahydride-7-carbaundecabor ate) cobaltate (III), andbis[tri(n-butyl)ammonium]bis(undecahydride-7-carbaundeca borate)nickelate (IV).

Two or more kinds of compounds (B-4) which react with the aforementioned Group 4 transition metal compound (A) to form an ion pair may be used by mixing them.

In preparation of an olefin polymerizing catalyst used in the present invention, a carrier can be used if necessary. The carrier is usually an inorganic or organic compound, and is granular or finely-divided solid. Among them, examples of the inorganic compound include porous oxides, inorganic chlorides, clays, clay minerals and ion-exchanging layer compounds.

As the porous oxide, specifically, SiO₂, Al₂O₃, MgO, ZrO, TiO₂, B₂O₃, CaO, ZnO, BaO, or ThO₂, or a complex or a mixture containing them, for example, natural or synthetic zeolite, SiO₂-MgO, SiO₂-Al₂O3, SiO₂-TiO₂, SiO₂-V₂O₅, SiO₂-Cr₂O₃, and SiO₂-TiO₂-MgO can be used.

In the present invention, an olefin low molecular weight polymer is prepared by polymerizing an olefin alone, or copolymerizing olefins in the presence of the aforementioned olefin polymerizing catalystst and wherein ethylene is used as a main monomer.

Herein, examples of the olefin include olefins of 2 to 20 carbon atoms, preferably 2 to 16 carbon atoms such as ethylene, propylene, 1-butene, 1-pentene, 1-hexene, 4-methyl-1-pentene, 3-methyl-1-pentene, 1-octene, 1-nonene, 1-decene, 1-undecene, 1-dodecene, 1-tetradecene, 1-hexadecene, 1-octadecene, and 1-eicocene. These olefins of 2 to 20 carbon atoms may be used by arbitrarily combining two or more kinds, wherein ethylene is used as a main monomer.

Particularly preferable are homopolymerization of ethylene or copolymerization of ethylene and other olefin, wherein ethylene is used as a main monomer. Preferably, the other olefin is propylene, 1-octene, 1-decene, 1-dodecene or 1-tetradecene.

Specific modes for preparing the olefin low molecular weight polymer of the present invention will be explained in detail below.

In the present invention, a polymerizing reaction is performed in a hydrocarbon medium. Examples of such the hydrocarbon medium include aliphatic hydrocarbons such as propane, butane, pentane, hexane, heptane, octane, decane, dodecane, and kerosene, alicyclic hydrocarbons such as cyclopentane, cyclohexane, and methylcyclopentane, aromatic hydrocarbons such as benzene, toluene, and xylene, halogenated hydrocarbons such as ethylene chloride, chlorobenzene, and dichloromethane, and petroleum fractions such as gasoline, and gas oil. Further, olefins used for polymerization may be used.

In the present invention, polymerization is performed in the presence of such the olefin polymerizing catalyst and, thereupon, the Group 4 transition metal compound (A) is used at an amount in a range of usually 10⁻⁸ to 10⁻² gram atom/liter, preferably 10⁻⁷ to 10⁻³ gram atom/liter in terms of the concentration of a transition metal atom in the polymerizing reaction system.

The component (B-1) is used at such an amount that a molar ratio of the component (B-1) and a total transition metal atom (M) in the component (A) [(B-1)/M] is usually 0.01 to 5000, preferably 0.05 to 2000. The component (B-2) is used at such an amount that a molar ratio of the component (B-2) and a total transition metal atom (M) in the component (A) [(B-2)/M] is usually 100 to 25000, preferably 500 to 10000. The component (B-3) is used at such an amount that a molar ratio of an aluminum atom in the component (B-3) and a total transition metal (M) in the component (A) [(B-3) /M] is usually 10 to 5000, preferably 20 to 2000. The component (B-4) is used at such an amount that a molar ratio of the component (B-4) and a transition metal atom (M) in the component (A) [(B-4)/M] is usually 1 to 50, preferably 1 to 20.

In copolymerization using ethylene as a main monomer, it is preferable that the content of ethylene in a raw material olefin is in a range of usually 60 to 100mol%, preferably 70 to 100mol%, and the content of other olefin is in a range of usually 0 to 40mol%, preferably 0 to 30mol%.

Polymerization is performed in a range of 100 to 250°C, more preferably 120 to 250°C, particularly preferably 130 to 200°C.

When a polymerizing temperature is in the aforementioned range, it is easy to remove the heat in the polymerization system, and a heat removal device can be miniaturized. In addition, in the same heat removal device, since a heat removing efficacy is enhanced, the productivity can be improved. Further, since polymerization is performed at a high temperature, even when the polymer concentration is increased, a solution viscosity is not increased much, a stirring power can be reduced, and polymerization can be performed at high concentration, thus, the productivity is improved.

Usually, when an olefin is (co)polymerized, the heat is removed by circulating a solvent in order to stabilize a polymerizing temperature. In a heat removal device used herein, generally, when an amount of heat to be removed is the same, as a polymerization temperature grows higher, a heat transfer area can be made smaller. The effect thereof varies depending on the conditions, such as a cooling medium. For example, when a simple countercurrent-type heat exchanger is used employing cooling water, in the case where a polymerizing temperature is 100°C, a necessary heat transfer area can be made smaller below 1/2 as compared with a polymerization temperature of 70°C. Like this, when a polymerizing temperature is raised, a necessary heat transfer area can be made smaller, and a heat removal device can be miniaturized, thus, equipment cost can be reduced.

It is preferable that an average residence time (polymerizing time) is 2 hours or shorter, preferably 1 hour or shorter. A polymerizing pressure is usually in a range of atmospheric pressure up to 100 kg/cm², preferably atmospheric pressure up to 50kg/cm², more preferably atmospheric pressure up to 40kg/cm².

A molecular weight of the resulting low molecular weight olefin (co)polymer can be regulated by an amount of hydrogen supplied to the polymerizing reaction system and/or a polymerizing temperature. An amount of hydrogen to be supplied to the polymerizing reaction system is in a range of usually 0.01 to 2, preferably 0.05 to 1 in terms of a molar ratio of hydrogen relative to an olefin.

In the present invention, a low molecular weight olefin (co) polymer is obtained by treating the polymerizing reaction mixture after completion of the polymerizing reaction according to the conventional method.

A molecular weight distribution (Mw/Mn) of the low molecular weight olefin (co)polymer of the present invention measured by gel permeation chromatography (GPC) is usually 3 or smaller, preferably 2.5 or smaller.

A intrinsic viscosity [η] of the low molecular weight olefin (co)polymer of the present invention measured at 135°C in decalin is in a range of preferably 0.60dl/g or smaller, more preferably 0.40dl/gor smaller, further preferably 0.005 to 0.40 dl/g, particularly preferably 0.005 to 0.35dl/g, still preferably 0.01 to 0.30dl/g. A low molecular weight olefin (co) polymer using ethylene as a main monomer is usually called ethylene wax. It is preferable that the content of an ethylene component unit therein is in a range of 80 to 100 mol%, preferably 85 to 100 mol%. It is preferable that the content of an olefin component unit of 3 or more carbon atoms is 0 to 20 mol%, preferably 0 to 15 mol%. A melting point of the ethylene wax obtained in the present invention is usually 132°C or lower.

According to the present invention, a low molecular weight olefin (co)polymer can be prepared with the high productivity. In addition, when a polymerizing temperature is 100°C to 250°C, a low molecular weight olefin (co)polymer having a narrow molecular weight distribution and a low melting point can be prepared with the high productivity. Further, a heat removal device can be miniaturized, the equipment cost can be reduced and, at the same time, a residence time can be shortened.

The Group 4 transition metal compound represented by the aforementioned general formula (1') can be prepared, for example, by the process described in J. Organomet. Chem., 561, 37 (1998). A specific process will be shown below, being not limiting the scope of the invention.

For example, the compound of the general formula (1') can be prepared by the following steps.

First, a precursor compound [20] of the general formula (1') can be prepared by the method of the following process [A] or [B].

### Process [A]:

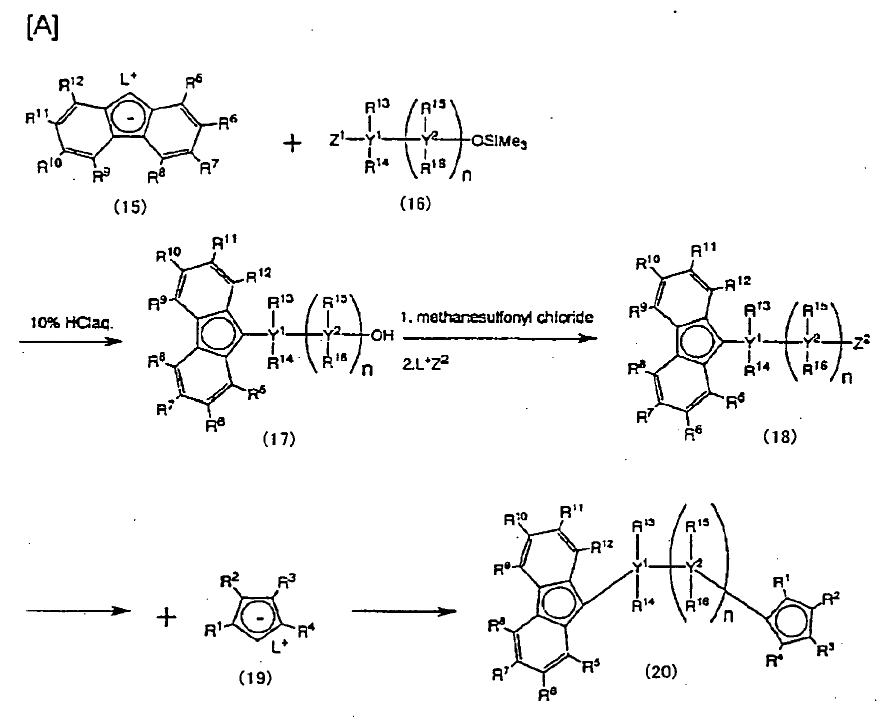

### Process [B]:

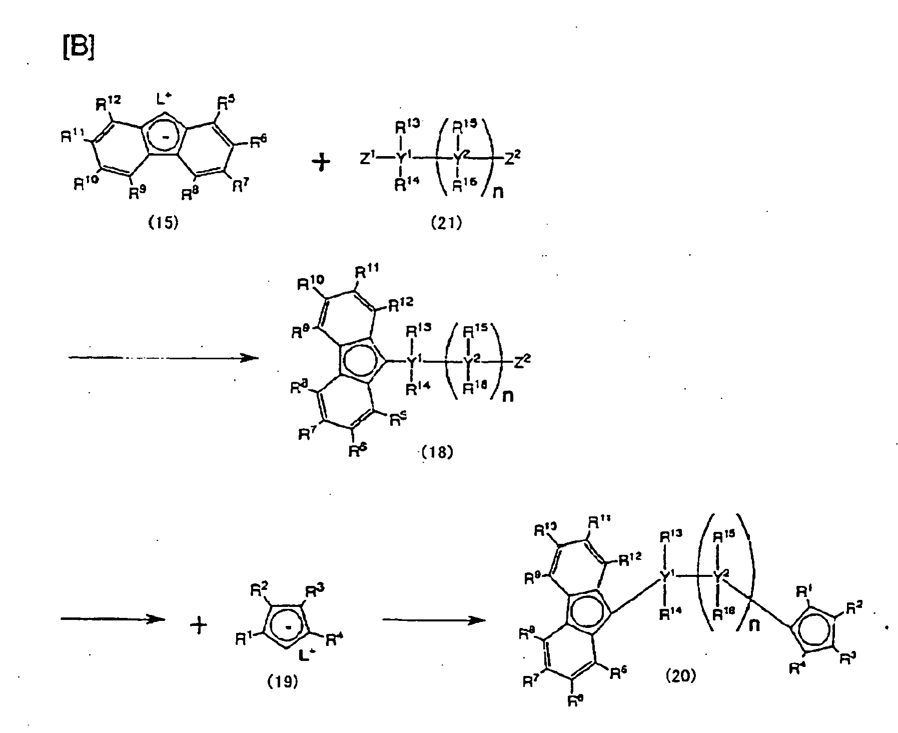

(wherein R¹ to R¹⁶, and Y are same as defined in the general formula (1'), L is an alkali metal, and Z¹ and Z² are a halogen or an anionic ligand, and may be the same or different from each other)

Further, a precursor on a cyclopentadienyl ligand of the general formula (1'), for example, (24) wherein R² and R⁴ are both a hydrogen atom in the precursor, can be prepared selectively by the following Process [C].

### Process [C] :

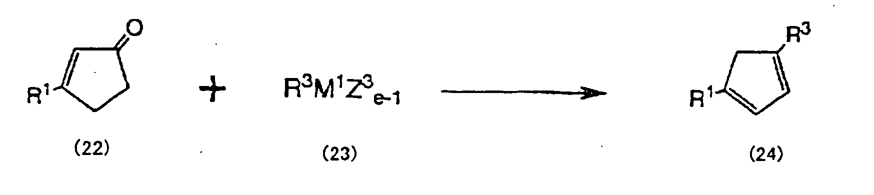

(wherein R¹ and R³ are same as defined in the general formula (1'), M¹ is an alkali metal or an alkaline earth metal, Z³ is the same as R³, or a halogen or an anionic ligand, and e is a valence number of M¹)

In addition, as a substitute process for (24), there are the following Process [D] and Process [E]. In these processes, since an isomer (25) wherein R¹ and R³ are adjacent to each other in (24) is produced as a side product in some cases, the Process [D] and the Process [E] can be employed depending on a combination of R¹ and R³ and the reaction conditions as far as an isomer is not produced as a side product.

### Process [D]:

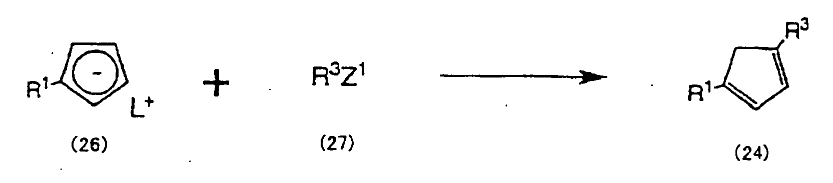

### Process [E] :

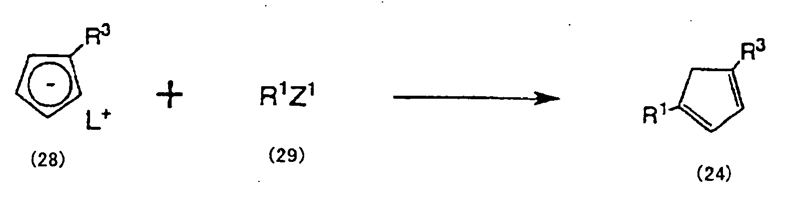

(wherein R¹ and R³ are as defined in the general formula (1'), L is an alkali metal, and Z¹ is a halogen or an anionic ligand)

Further, when R³ is a substituent represented by CR¹⁷R¹⁸R¹⁹, (24) may be also prepared by the following Process [F].

### Process [F] :

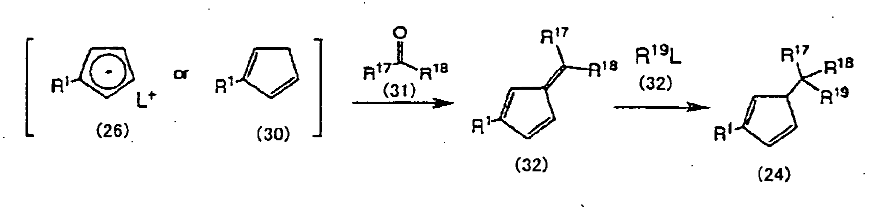

(wherein R¹ is as defined in the general formula (1'), R¹⁷, R¹⁸ and R¹⁹ are selected from hydrogen, a hydrocarbon group and a silicon-containing hydrocarbon group, and may be the same or different from each other, and L is an alkali metal)

Also in this process, since an isomer wherein R¹ and R³ are adjacent to each other is produced as a side product in some cases, the Process [F] can be employed depending on a combination of R¹ and R³ and the reaction conditions as far as an isomer is not produced as a side product.

Examples of the alkali metal used in the reactions of the above Processes [A] to [F] include lithium, sodium and potassium and examples of the alkaline earth metal include magnesium and calcium. In addition, examples of the halogen include fluorine, chlorine, bromine and iodine. Examples of the anionic ligand include alkoxy groups such as methoxy, tert-butoxy and phenoxy, carboxylate groups such as acetate and benzoate, sulfonate groups such as mesylate and tosylate.

Then, an example of preparing a metallocene compound from the precursor compound of the general formula (20) will be shown. However, this does not limit the scope of the invention, and the metallocene compound may be prepared by appropriately selecting other processes.

The precursor compound of the general formula (20) obtained by the reaction of the Process [A] or [B] is contacted with an alkali metal, an alkali metal hydride or an organic alkali metal at a reaction temperature in a range of -80 to 200°C in an organic solvent to obtain a dialkali metal salt.

Examples of the organic solvent used in the above reaction include aliphatic hydrocarbons such as pentane, hexane, heptane, cyclohexane or decalin, aromatic hydrocarbons such as benzene, toluene or xylene, ethers such as THF, diethyl ether, dioxane or 1,2-dimethoxyethane, and halogenated hydrocarbons such as dichloromethane or chloroform.

Example of the alkali metal used in the above reaction include lithium, sodium, and potassium, examples of the alkali metal hydride include sodium hydride and potassium hydride and examples of the organic alkali metal include methyllithium, butyllithium and phenyllithium.

Then, a metallocene compound represented by the general formula (1') can be synthesized by reacting the aforementioned dialkali metal salt with a compound represented by the following general formula (33) in an organic solvent.

MZₖ (33)

(wherein M is a metal selected from Group 4 of Periodic Table, Z may be selected in the same or different combination from a halogen, an anionic ligand and a neutral ligand which can be coordinated with a lone electron pair, and k is an integer of 3 to 6)

Preferable examples of the compound represented by the general formula (33) include trivalent or tetravalent titanium fluoride, chloride, bromide and iodide, tetravalent zirconium fluoride, chloride, bromide and iodide, tetravalent hafnium fluoride, chloride, bromide and iodide, and complexes of these compounds and ethers such as THF, diethyl ether, dioxane or 1,2-dimethoxyethane.

In addition, examples of the organic solvent used include those as described above. A reaction of the dialkali metal salt and the compound represented by the general formula (33) is preferably performed by an equimolar reaction, and can be performed at a reaction temperature in a range of -80 to 200°C in the aforementioned organic solvent.

The metallocene compound obtained in the reaction can be isolated and purified by a method such as extraction, recrystallization or sublimation. In addition, the bridged metallocene compound of the present invention obtained by such the process can be identified by using an analyzing procedure such as proton nuclear magnetic resonance spectrum, ¹³C nuclear magnetic resonance spectrum, mass spectrometry and elemental analysis.

Since the low molecular weight ethylene (co) polymer obtained by the present invention has a narrow molecular weight distribution and a low melting point, the polymer can be suitably used in utilities such as a paint modifier, a matting agent, a pigment dispersant (in particular, pigment master batch raw material), a polyvinyl chloride lubricant, a resin molding lubricant, a rubber processing aid, a toner releasing agent, a paper improver, an ink anti-wear agent, afiberprocessingaid, a hotmelt adhesive additive, an electrical insulator, a natural wax component, an asphalt flowability improver, various oil hardeners, a communication cable filler, a moistureproof coating agent raw material, a paper coating beatability imparting agent, a suspension or emulsion polymerization polymer emulsification aid, an antistatic or weathering agent substrate, an automobile engine oil, a gear oil, ATF, a base oil and a viscosity index improver for the industrial lubricant, a grease base oil, a metal processingoil, a rubber/resinmodifier, an aluminumdie casting releasing agent, a fuel oil additive, a paint, and an ink modifier.

### EXAMPLES

The present invention will be more specifically explained below by way of Examples, but the present invention is not limited by these Examples.

The physical properties and the natures of the resulting polymers were measured by the following methods.
[Weight average molecular weight (Mw), number average molecular weight (Mn)]

These molecular weights were measured using GPC-150C by Waters Corporation as follows : a separating column was composed of TSKgel GMH6-HT and TSKgel GMH6-HTL, a column size was (inner diameter 7.5mm, length 600mm), a column temperature was 140°C, a mobile phase was (o-dichlorobenzene (Wako Pure Chemical Industries, Ltd.) and 0.025wt.% BHT (Takeda Chemical Industries, Ltd.) as an antioxidant), the mobile phase was moved at 1.0ml/min, the sample concentration was 0.1 wt.%, a sample injection amount was 500µl, and a detector was a differential refractometer. As a standard polystyrene, polystyrene manufactured by Tosoh Corporation was used for a molecular weight of Mw < 1000 and Mw > 4 × 10⁶ and polystyrene manufactured by Pressure Chemical Co, was used for a molecular weight of 1000 ≤ Mw ≤ 4 × 10⁶.

### [Intrinsic viscosity ([η]) ]

The intrinsic viscosity is a value measured at 135°C using a decalin solvent. That is, about 20mg of a granulated pellet is dissolved in 15 ml of decalin, and a specific viscosity ηₛₚ is measured in an oil bath at 135°C. Five ml of a decalin solvent is added to this decalin solution to dilute the solution, and a specific viscosity ηₛₚ is measured similarly. This diluting procedure is further repeated two times, and a ηₛₚ/C value when the concentration (C) is extrapolated to 0 is obtained as a intrinsic viscosity.

[η]= lim (ηₛₚ/C) (C → 0)

### [Melt flow rate (MFR₁₀)]

This is a numerical value measured at 190°C under 10kg loading by a standard method of ASTM D-1238.

### [Density]

A strand after measurement of MFR at 190°C under 2.16kg loadingwas heat-treated at 120°C for 1 hour, and gradually cooled to room temperature over 1 hour and, thereafter, the density was measured by a density gradient tube method.

### [Melting point (Tm)]

By differential scanning calorimetry (DSC), a polymer sample was held at 240°C for 10 minutes, cooled to 30°C, held for 5 minutes, and, thereafter, a temperature of the sample was raised at 10°C /min. The melting point was calculated from a crystal melting peak thereupon.

### [Reference Example 1]

One liter of hexane was charged into an stainless autoclave having an inner volume of 2 liter which had been sufficiently replaced with nitrogen, a temperature in the system was risen to 145°C, and hydrogen was introduced to 0.3 MPa-G. Thereafter, a total pressure was retained at 3 MPa-G by continuously supplying only ethylene, and 0.3 mmol of triisobutylaluminum, 0.04 mmol of N,N-dimethylanilinium tetrakis(pentafluorophenyl)borate and 0.00005 mmol of ethylene(1-cyclopentadienyl)(fluorenyl)zirconium dichloride were charged therein with nitrogen to initiate polymerization. Polymerization was performed at 150°C for 30 minutes. The polymerization was stopped by addition of a small amount of ethanol to the system, and unreacted ethylene was purged. The resulting polymer solution was dried at 80°C overnight under reduced pressure. As a result, 20.0 g of an ethylene polymer having [η] of 0.05 dl/g was obtained. The results are shown in Table 1.

### [Reference Example 2]

One liter of hexane was charged into a stainless autoclave having an inner volume of 2 liter which had been sufficiently replaced with nitrogen, a temperature in the system was raised to 145°C, and hydrogen was introduced to 0.2 MPa-G. Thereafter, a total pressure was retained at 3 MPa-G by continuously supplying only ethylene, and 0.3 mmol of triisobutylaluminum, 0.04 mmol of N, N-dimethylanilinium tetrakis(pentafluorophenyl)borate and 0.00005 mmol of ethylene(1-cyclopentadienyl)(fluorenyl)zirconium dichloride were charged therein with nitrogen to initiate polymerization. Polymerization was performed at 150°C for 30 minutes. The polymerization was stopped by addition of a small amount of ethanol to the system, and unreacted ethylene was purged. The resulting polymer solution was dried at 80°C overnight under reduced pressure. As a result, 32.0g of an ethylene polymer having [η] of 0.11 dl/g was obtained. The results are shown in Table 1.

### [Example 3]

One liter of hexane was charged into a stainless autoclave having an inner volume of 2 liter which had been sufficiently replaced with nitrogen, a temperature in the system was raised to 145°C, and hydrogen was introduced to 1.0 MPa-G. Thereafter, a total pressure was retained at 3 MPa-Gby continuously supplying only ethylene, and 0.3 mmol of triisobutylaluminum, 0.04mmol of N,N-dimethylanilinium tetrakis(pentafluorophenyl)borate and 0.0001 mmol of ethylene (1-cyclopentadienyl) (3, 6-t-butylfluorenyl)zirconium dichloride were charged therein with nitrogen to initiate polymerization. Polymerization was performed at 150°C for 30 minutes. The polymerization was stopped by addition of a small amount of ethanol to the system, and unreacted ethylene was purged. The resulting polymer solution was dried at 80°C overnight under reduced pressure. As a result, 11.0 g of an ethylene polymer having [η] of 0.04 dl/g was obtained. The results are shown in Table 1..

### [Example 4]

One liter of hexane was charged into a stainless autoclave having an inner volume of 2 liter which had been sufficiently replaced with nitrogen, a temperature in the system was raised to 145°C, and hydrogen was introduced to 0.2MPa-G. Thereafter, a total pressure was retained at 3 MPa-G by continuously supplying only ethylene, 0.3 mmol of triisobutylaluminum, 0.04 mmol of N,N-dimethylanilinium tetrakis(pentafluorophenyl)borate and 0.00005mmol of ethylene(1-cyclopentadienyl)(3,6-t-butylfluorenyl)zirconium dichloride were charged therein with nitrogen to initiate polymerization. Polymerization was performed at 150°C for 30 minutes. The polymerization was stopped by addition of a small amount of ethanol to the system, and unreacted ethylene was purged.

Resulting polymer solution was dried at 80°C overnight under reduced pressure. As a result, 16.1g of an ethylene polymer having [η] of 0.22 dl/g was obtained. The results are shown in Table 1.

### [Comparative Example 1]

One liter of hexane was charged into a stainless autoclave having an inner volume of 2 liter which had been sufficiently replaced with nitrogen, a temperature in the system was raised to 145°C, and hydrogen was introduced to 1.3 MPa-G. Thereafter, a total pressure was retained at 3 MPa-G by continuously supplying only ethylene, and 0.3mmol of triisobutylaluminum, 0.04mmol of N, N-dimethylanilinium tetrakis (pentafluorophenyl) borate and 0.0002 mmol of ethylenebis (indenyl) zirconium dichloride were charged therein with nitrogen to initiate polymerization. Polymerization was performed at 150°C for 30 minutes. The polymerization was stopped by addition of a small amount of ethanol to the system, and unreacted ethylene was purged. The resulting polymer solution was dried at 80°C overnight under reduced pressure. As a result, 12.7g of an ethylene polymer having [η] of 0.04 dl/g was obtained. The results are shown in Table 1.

### [Reference Example 5]

One liter of hexane was charged into a stainless autoclave having an inner volume of 2 liter which had been sufficiently replaced with nitrogen and, subsequently, 100g of propylene was charged therein. A temperature in the system was raised to 145°C, a total pressure was retained at 3 MPa-G by continuously supplying only ethylene, and 0.3 mmol of triisobutylaluminum, 0.04mmol of N,N-dimethylanilinium tetrakis(pentafluorophenyl)borate and 0.0002mmol of ethylene(1-cyclopentadienyl)(fluorenyl)zirconium dichloride were charged therein with nitrogen to initiate polymerization. Polymerization was performed at 150°C for 30 minutes. The polymerization was stopped by addition of a small amount of ethanol to the system, and unreacted ethylene was purged. The resulting polymer solution was dried at 80°C overnight under reduced pressure. As a result, 23.6 g of an ethylene polymer having [η] of 0.56dl/g was obtained. The results are shown in Table 2.

### [Reference Example 6]

One liter of hexane was charged into a stainless autoclave having an inner volume of 2 liter which had been sufficiently replaced with nitrogen and, subsequently, 80g of propylene was charged therein. A temperature in the system was raised to 145°C, and hydrogen was introduced to 0.1 MBa-G. Thereafter, a total pressure was retained at 3 MPa-G by continuously supplying only ethylene, and 0.3 mmol of triisobutylaluminum, 0.04 mmol of N,N-dimethylanilinium tetrakis(pentafluorophenyl)borate and 0.0002 mmol of ethylene(1-cyclopentadienyl)(fluorenyl)zirconium dichloride were charged therein with nitrogen to initiate polymerization. Polymerization was performed at 150°C for 30 minutes. The polymerization was stopped by addition of a small amount of ethanol to the system, and unreacted ethylene was purged. The resulting polymer solution was dried at 80°C overnight under reduced pressure. As a result, 28.8 g of an ethylene polymer having [η] of 0.18dl/g was obtained. The results are shown in Table 2.

**[Table 1]**

| | Component (A) | | Component (B) | | | | Hydrogen pressure *1 | Polymerizing temperature °C | Polymerizing time min | Yield g | [η] dl/g | Polymerizing activity *2 |
|---|---|---|---|---|---|---|---|---|---|---|---|---|
| | Kind | Amount mmol | Kind | Amount mmol | Kind | Amount mmol | | | | | | |
| Reference Example 1 | a | 0.00005 | I | 0.04 | TIBA | 0.3 | 0.3 | 150 | 30 | 20 | 0.05 | 400,000 |
| Reference Example 2 | a | 0.00005 | I | 0.04 | TIBA | 0.3 | 0.2 | 150 | 30 | 32 | 0.11 | 640,000 |
| Example 3 | b | 0.0001 | I | 0.04 | TIBA | 0.3 | 1.0 | 150 | 30 | 11 | 0.04 | 110,000 |
| Example 4 | b | 0.00005 | I | 0.04 | TIBA | 0.3 | 0.2 | 150 | 30 | 16.1 | 0.22 | 322,000 |
| Comparative Example 1 | c | 0.0002 | I | 0.04 | TIBA | 0.3 | 1.3 | 150 | 30 | 12.7 | 0. 04 | 63,500 |

| | | | | | | | | | | | | |
|---|---|---|---|---|---|---|---|---|---|---|---|---|
| a: Ethylene(1-cyclopentadienyl)(fluorenyl)zirconium dichloride b: Ethylene(1-cyclopentadienyl)(3,6-tBu2fluorenyl)zirconium dichloride c: Ethylenebis(indenyl)zirconium dichloride I: N, N-dimethylanilinium tetrakis(pentafluorophenyl)borate TIBA: Triisobutylaluminum *1: Mpa-G *2: g-PE/mmol-Zr | | | | | | | | | | | | |

**[Table 2]**

| | Component (A) | | Component (B) | | | | Propylene g | Hydrogen pressure *1 | Polymerizing temperature °C | Polymerizing time min | Yield g | [η] dl/g | Density kg/m³ | Polymerizing activity *2 |
|---|---|---|---|---|---|---|---|---|---|---|---|---|---|---|
| | Kind | Amount mmol | Kind | Amount mmol | Kind | Amount mmol | | | | | | | | |
| Reference Example 5 | a | 0.0002 | I | 0 04 | TIBA | 0.3 | 100.0 | 0 | 150 | 30 | 23.6 | 0.56 | 902 | 118,000 |
| Reference Example 6 | a | 0.0002 | I | 0.04 | TIBA | 0.3 | 80.0 | 0.1 | 150 | 30 | 28.8 | 0.18 | 897 | 144,000 |

| | | | | | | | | | | | | | | |
|---|---|---|---|---|---|---|---|---|---|---|---|---|---|---|
| a: Ethylene(1-cyclopentadienyl)(fluorenyl)zirconium dichloride I: N, N-dimethylanilinium tetrakis(pentafluorophenyl)borate TIBA: Triisobutylaluminum *1: Mpa-G *2: g-Polymer/mmol-Zr | | | | | | | | | | | | | | |

### [Reference Example 7]

A glass autoclave having an inner volume of 1000ml was equipped with a thermometer, a gas blowing tube and a glass stirring wing, and sufficiently replaced with nitrogen. Thereafter, 250 ml of n-decane and 250ml of 1-decene were charged, and a temperature was brought to 90°C while flowing nitrogen at 50 liter /hr. On the other hand, a magnetic stirrer chip was placed into a flask with a branch having an inner volume of 30ml which had been sufficiently replaced with nitrogen, and 0.002 mmol of a solution of ethylene(1-cyclopentadienyl)(fluorenyl)zirconium dichloride in toluene as a transition metal compound, and 2 mmol of a solution of methylaluminoxane in toluene (Al=1.53M) were added thereto, followed by stirring for 30 minutes. Nitrogen in the glass autoclave was stopped, hydrogen was flown at an amount of 20 liter/hr, and the aforementioned solution was added to initiate polymerization. During polymerization, hydrogen was continuously supplied at an amount of 20 liter/ hr, polymerization was performed at 90°C for 60 minutes under normal pressure, and the polymerization was stopped by addition of a small amount of isopropanol. This was added to a polymer solution in 300ml of 1N hydrochloric acid, followed by stirring. This solution was transferred to a separating funnel, the organic layer was taken, the organic layer was washed with water, and the solvent and unreacted 1-decene were distilled off at 175°C under reduced pressure (1mmHg). The resulting transparent liquid polymer was 97.17g, and the polymerizing activity was 48.59kg-polymer/mmol-Zr/hr. The polymer was analyzed and, as a result, [η] was 0.04 dl/g, Mw was 4,250, Mn was 2,320, and Mw/Mn was 1.64. The results are shown in Table 3.

### [Reference Example 8]

The same procedures as those of Reference Example 7 were performed except that a polymerizing temperature was changed to 60°C, and hydrogen was changed to 10 liter/hr in Reference Example 7.

The resulting transparent liquid polymer was 74.64g, and the polymerizing activity was 37.32 kg-polymer/mmol-Zr/hr. The polymer was analyzed and, as a result, [η] was 0.09dl/g, Mw was 13,360, Mn was 7, 220, and Mw/Mn was 1.85. The results are shown in Table 3.

### [Reference Example 9]

The same procedures as those of Reference Example 7 were performed except that a polymerizing temperature was changed to 70°C, and hydrogen was changed to 50 liter/hr in Reference Example 7.

The resulting transparent liquid polymer was 77.34g, and the polymerizing activity was 38.67 kg-polymer/mmol-Zr/hr. The polymer was analyzed and, as a result, [η] was 0.06dl/g, Mw was 9.720, Mn was 5,170, and Mw/Mn was 1.88. The results are shown in Table 3.

### [Reference Example 10]

A glass autoclave having an inner volume of 1000 ml was equipped with a thermometer, a gas blowing tube and a glass stirring wing, and sufficiently replaced with nitrogen. Thereafter, 250ml of n-decane and 250ml of 1-decene were charged, and a temperature was brought to 60°C while flowing nitrogen at 50 liter/hr. Nitrogen in the glass autoclave was stopped, hydrogen was flown at an amount of 10 liter/hr, thereafter, 2 mmol of a solution of triisobutylaluminum in n-decane was added, 0.002mmol of a solution of ethylene(1-cyclopentadienyl)(fluorenyl)zirconium dichloride as a transition metal compound was added and, finally, 0.04 mmol of a solution of N,N-dimethylaluminium tetrakis(pentafluorophenyl)borate in toluene was added to initiate polymerization. During polymerization, hydrogen was continuously suppliedat an amount of 10 liter/hr, polymerization was performed at 60°C for 60 minutes under normal pressure, and the polymerization was stopped by addition of a small amount of isopropanol. This was added to a polymer solution in 300ml of 1N hydrochloric acid, followed by stirring. This solution was transferred to a separating funnel, the organic layer was taken, thereafter, the organic layer was washed with water, and the solvent and unreacted 1-decene were distilled off at 175°C under reduced pressure (1mmHg). The resulting transparent liquid polymer was 106.20g, and the polymerizing activity was 53. 10kg-polymer/mmol-Zr/hr. The polymer was analyzed and, as a result, [η] was 0.13 dl/g, Mw was 22,670, Mn was 13,700, and Mw/Mn was 1.65. The results are shown in Table 3.

### [Reference Example 11]

A glass autoclave having an inner volume of 1000 ml was equipped with a thermometer, a gas blowing tube and a glass stirring wing, and sufficiently replaced with nitrogen. Thereafter, 400ml of n-decane and 100ml of 1-decene were charged, and a temperature was brought to 60°C while flowing nitrogen at 50 liter/hr. On the other hand, a magnetic stirrer chip was placed into a flask with a branch having an inner volume of 30ml which had been sufficiently replaced with nitrogen, and 0. 002mmol of a solution of ethylene(1-cyclopentadienyl)(fluorenyl)zirconium dichloride in toluene as a transition metal compound, and 2 mmol of a solution of methylaluminoxane in toluene (Al=1.53M) were added thereto, followed by stirring for 30 minutes. Nitrogen in the glass autoclave was stopped, ethylene was flown for 5 minutes at an amount of 50 liter/hr, hydrogen was flown at an amount of 10 liter/hr while maintaining a flow rate of ethylene, and the aforementioned solution was added to initiate polymerization. During polymerization, ethylene and hydrogen were continuously supplied at an amount of 50 liter/hr and 10 liter/hr, respectively, polymerization was performed at 60°C for 60 minutes under normal pressure, and the polymerization was stopped by addition of a small amount of isopropanol. This was added to a polymer solution in 300 ml of 1N hydrochloric acid, followed by stirring. This solution was transferred to a separating funnel, the organic layer was taken, the organic layer was washed with water, and the solvent and unreacted 1-decene were distilled off at 175°C under reduced pressure (1mmHg). The resulting transparent liquid polymer was 49.49g, and the polymerizing activity was 27.74 kg-polymer /mmol-Zr/hr. The polymer was analyzed and, as a result, [η] was 0.16 dl/g, Mw was 27,060, Mn was 17,980, and Mw/Mn was 1.51. The results are shown in Table 3.

### [Reference Example 12]

The same procedures as those of Reference Example 7 were performed except that 1-decene as a monomer was changed to 1-octene, a polymerizing temperature was changed to 50°C, and hydrogen was changed to 10 liter/hr in Reference Example 7.

The resulting transparent liquid polymer was 49.95g, and the polymerizing activity was 24.98kg-polymer/mmol-Zr/hr. The polymer was analyzed and, as a result, [η] was 0.10dl/g, Mw was 16,700, Mn was 9,380, and Mw/Mn was 1.63. The results are shown in Table 3.

### [Reference Example 13]

The same procedures as those of Reference Example 7 were performed except that 1-decene as a monomer was changed to 1-dodecene, a polymerizing temperature was changed to 50°C, and hydrogen was changed to 10 liter/hr in Reference Example 7.

The resulting transparent liquid polymer was 29.59kg, and the polymerizing activity was 14.80kg-polymer/mmol-Zr/hr. The polymer was analyzed and, as a result, [η] was 0.10dl/g, Mw was 18,360, Mn was 11,400, and Mw/Mn was 1.61. The results are shown in Table 3.

### [Reference Example 14]

The same procedures as those of Reference Example 7 were performed except that 1-decene as a monomer was changed to 1-tetradecene, a polymerizing temperature was changed to 50°C, and hydrogen was changed to 10 liter/hr in Reference Example 7.

The resulting transparent liquid polymer was 20.40kg, and the polymerizing activity was 10.20kg-polymer/mmol-Zr/hr. The polymer was analyzed and, as a result, [η] was 0.11dl/g, Mw was 23,570, Mn was 14,460, and Mw/Mn was 1.63. The results are shown in Table 3.

### [Reference Example 15]

The same procedures as those of Reference Example 7 were performed except that ethylene(1-cyclopentadienyl)(fluorenyl)zirconium dichloride was changed to ethylene(1-cyclopentadienyl)(2,7-di-tert-butyl-fluorenyl)zi rconium dichloride, a polymerizing temperature was changed to 60°C, and hydrogen was changed to 10 liter/hr in Reference Example 7.

The resulting transparent liquid polymer was 28.25kg, and the polymerizing activity was14.13kg-polymer/mmol-Zr/hr. The polymer was analyzed and, as a result, [η] was 0.08dl/g, Mw was 12,20 , Mn was 7,410, and Mw/Mn was 1.64. The results are shown in Table 3.

### [Reference Example 16]

The same procedures as those of Reference Example 7 were performed except that ethylene(1-cyclopentadienyl)(fluorenyl)zirconium dichloride was changed to ethylene(1-cyclopentadienyl)(octamethyloctahydrodibenzofluo renyl)zirconium dichloride, a polymerizing temperature was changed to 80°C, and hydrogen was changed to 35 liter/hr in Reference Example 7.

The resulting transparent liquid polymer was 47.51kg, and thepolymerizingactivitywas 23.76kg-polymer /mmol-Zr/hr. The polymer was analyzed and, as a result, [η] was 0.07dl/g, Mw was 9,910, Mn was 5,860, and Mw/Mn was 1.69. The results are shown in Table 3.

### [Reference Example 17]

Te same procedures as those of Reference Example 7 were performed except that ethylene(1-cyclopentadienyl)(fluorenyl)zirconium dichloride was changed to ethylene (1-cyclopentadienyl)(octamethyloctahydrodibenzofluorenyl)zi rconium dichloride, 1-decene as a monomer was changed to 1-dodecene, a polymerizing temperature was changed to 50°C, and hydrogen was changed to 35 liter/hr in Reference Example 7.

The resulting transparent liquid polymer was 45.30kg, and the polymerizing activity was 22. 5kg-polymer/mmol-Zr/hr. The polymer was analyzed and, as a result, [η] was 0.07dl/g, Mw was 8,720, Mn was 4,900, and Mw/Mn was 1.78. The results are shown in Table 3.

### [Reference Example 18]

The same procedures as those of Reference Example 7 were performed except that ethylene(1-cyclopentadienyl)(fluorenyl)zirconium dichloride was changed to (1-cyclopentadienyl)(ocatamethyloctahydrodibenzofluorenyl)z irconium dichloride, 1-decene as a monomer was changed to 1-tetradecene, a polymerizing temperature was changed to 50°C, and hydrogen was changed to 35 liter/hr in Reference Example 7.

The resulting transparent liquid polymer was 39.20kg, and the polymerizing activity was19.60kg-polymer/mmol-Zr/hr. The polymer was analyzed and, as a result, [η] was 0.06dl/g, Mw was 9,680, Mn was 6,150, and Mw/Mn was 1.57. The results are shown in Table 3.

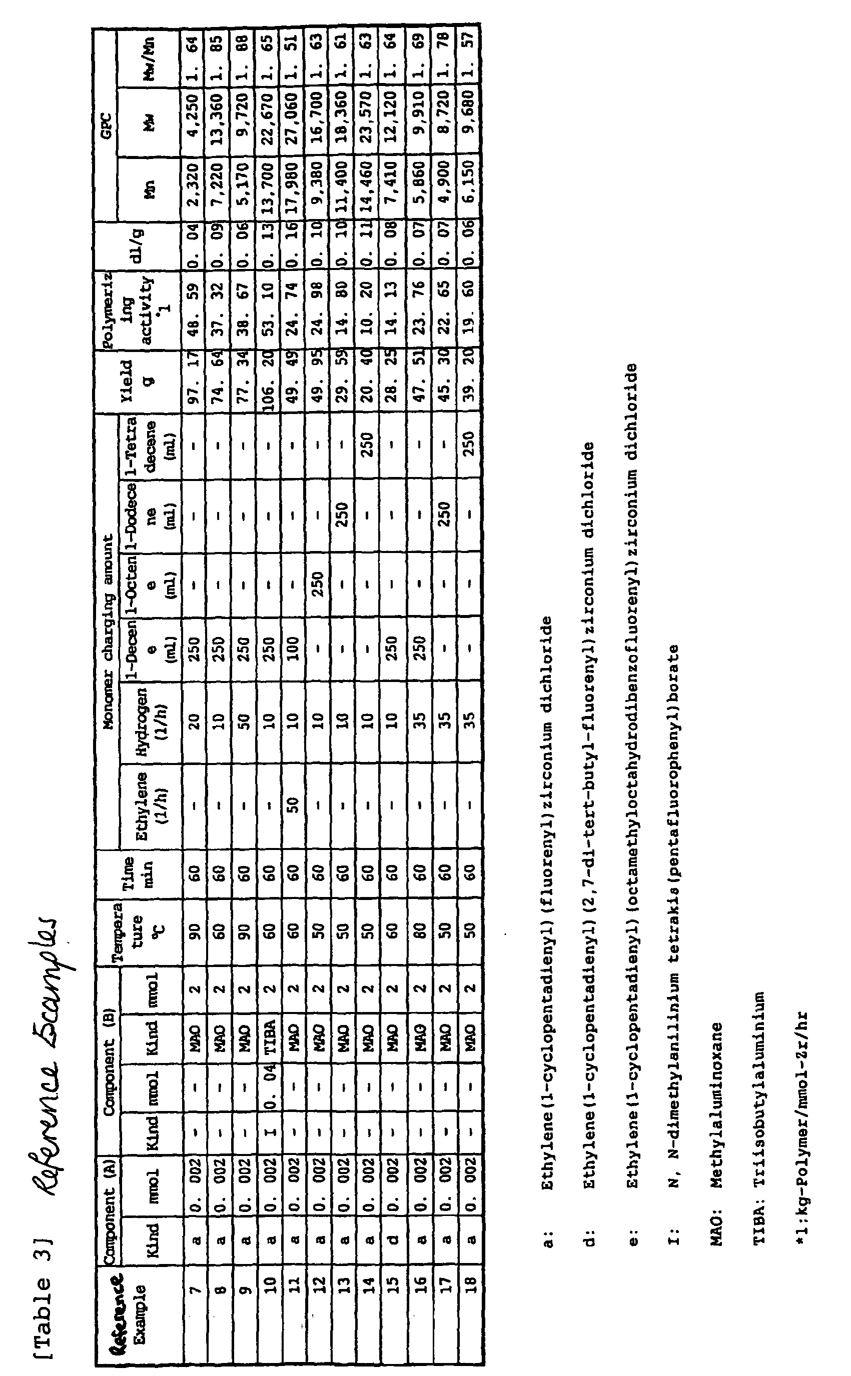

## Claims

1. A process for preparing a low molecular weight olefin (co)polymer, which comprises homopolymerizing or copolymerizing an olefin in which ethylene is used as a main monomer, in a range of 100 to 250°C, in the presence of an olefin polymerizing catalyst, said catalyst comprising:
(A) a Group 4 transition metal compound represented by the following general formulae (1) and (1') at the same time, and
(B) at least one compound selected from (B-1) an organometallic compound, (B-2) an organoaluminum compound, (B-3) an organoaluminum oxy-compound, and (B-4) a compound which reacts with the Group 4 transition metal compound (A) to form an ion pair; 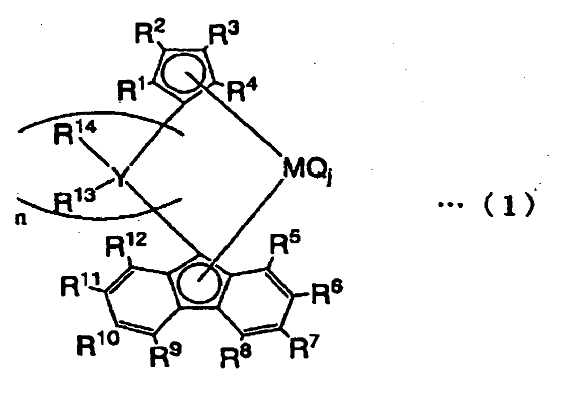 wherein R¹, R², R³, R⁴, R⁵, R⁶, R⁷, R⁸, R⁹, R¹⁰, R¹¹, R¹², each R¹³ and each R¹⁴ are the same or different and are selected from hydrogen, a hydrocarbon group, and a silicon-containing group, or adjacent substituents of R¹ to R¹⁴ may be taken together to form a ring; M is Ti, Zr or Hf; each Y is the same or different and is a Group 14 atom; Q is selected from a halogen, a hydrocarbon group, a neutral conjugated or non-conjugated diene of 10 or less carbon atoms, an anionic ligand, and a neutral ligand which can be coordinated with a lone electron pair, wherein when two or more groups Q are present, each Q may be the same or different; n is an integer or 2 to 4; and j is an integer of 1 to 4, 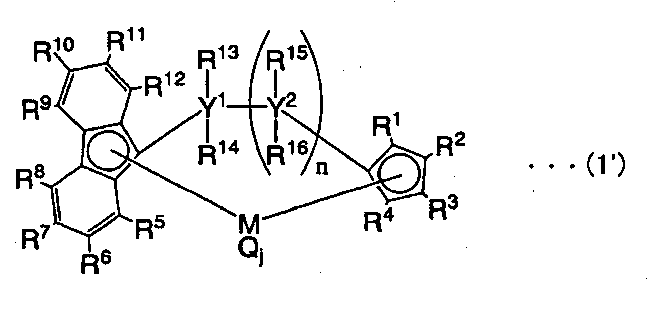 in the formula (1') , R¹, R², R³, R⁴, R⁵, R⁶, R⁷, R⁸, R⁹, R¹⁰, R¹¹ and R¹² are the same or different and are selected from a hydrogen atom, a hydrocarbon group, and a silicon-containing group; R¹³, R¹⁴, each R¹⁵ and each R¹⁶ are the same or different and are selected from a hydrogen atom and a hydrocarbon group; or adjacent substituents of R⁵ to R¹² may be taken together to form a ring, R¹³ and R¹⁵ may be taken together to form a ring, or R¹³ and R¹⁵ may be taken together to form a ring and, at the same time, R¹⁴ and R¹⁶ may be taken together to form a ring; n is an integer of 1 to 3 and, when n is 1, R¹ to R¹⁶ are not all a hydrogen atom; Y¹ and Y² are a Group 14 atom, and may be the same or different from each other; M is Ti, Zr or Hf; Q is selected from a halogen, a hydrocarbon group, an anionic ligand and a neutral ligand which can be coordinated with a lone electron pair, wherein when two or more groups Q are present, each Q may be the same or different; and j is an integer of 1 to 4.

2. A process according to claim 1, wherein the intrinsic viscosity [η] of the low molecular weight olefin (co)polymer measured in decalin at 135°C is 0.6dl/g or less.

3. A process according to claim 1 or 2, wherein the low molecular weight olefin (co)polymer is obtained by homopolymerizing or copolymerizing, in an arbitrary combination, olefin(s) of 2 to 20 carbon atoms.

4. A process according to claim 3, wherein at least one olefin is ethylene, propylene, 1-octene, 1-decene, 1-dodecene or 1-tetradecene.

5. A process according to any one of claims 1 to 4, wherein the average residence time of the polymerization is 2 hours or shorter.

6. Use of an olefin polymerizing catalyst for preparing a low molecular weight olefin (co) polymer by homopolymerizing or copolymerizing an olefin in which ethylene is used as a main monomer, in a range of 100 to 250°C, wherein the catalyst comprises:
(A) a Group 4 transition metal compound represented by the general formulae (1) and (1') as defined in claim 1, and
(B) at least one compound selected from (B-1) an organometallic compound, (B-2) an organoaluminum compound, (B-3)an organoaluminum oxy-compound,and(B-4)a compound which reacts with the Group 4 transition metal compound (A) to form an ion pair.

## Patentansprüche

1. Verfahren zur Herstellung eines Olefin-(Co)polymers mit niedrigem Molekulargewicht, umfassend die Homopolymerisation oder Copolymerisation eines Olefins, bei dem Ethylen als Hauptmonomer verwendet wird, im Bereich von 100 bis 250°C in Gegenwart eines Olefin-Polymerisationskatalysators, wobei der Katalysator umfasst:
(A) eine Übergangsmetallverbindung der Gruppe 4 , die durch die folgenden allgemeinen Formeln (1) und (1') gleichzeitig dargestellt sind, und
(B) mindestens eine Verbindung, die ausgewählt ist aus (B-1) einer Organometallverbindung, (B-2) einer Organoaluminiumverbindung, (B-3) einer Organoaluminiumoxyverbindung und (B-4) einer Verbindung, die mit der Übergangsmetallverbindung (A) der Gruppe 4 reagiert, um ein Ionenpaar zu bilden; 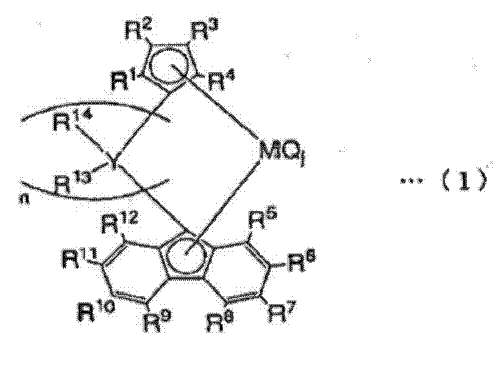 worin R¹, R², R³, R⁴, R⁵, R⁶, R⁷, R⁸, R⁹, R¹⁰, R¹¹, R¹², jedes R¹³ und jedes R¹⁴ gleich oder verschieden sind und aus Wasserstoff, einer Kohlenwasserstoffgruppe und einer Silizium enthaltenden Gruppe ausgewählt sind, oder benachbarte Substituenten von R¹ bis R¹⁴ zur Bildung eines Rings zusammengenommen werden können; M Ti, Zr oder Hf ist; jedes Y gleich oder verschieden ist und ein Atom der Gruppe 14 ist; Q ausgewählt ist aus einem Halogen, einer Kohlenwasserstoffgruppe, einem neutralen konjugierten oder nicht konjugierten Dien mit 10 oder weniger Kohlenstoffatomen, einem anionischen Liganden und einem neutralen Liganden, der mit einem einzelnen Elektronenpaar koordiniert werden kann, wobei bei Vorhandensein von 2 oder mehr Q-Gruppen Q jeweils gleich oder verschieden sein kann; n eine ganze Zahl von 2 bis 4 ist; und j eine ganze Zahl von 1 bis 4 ist, 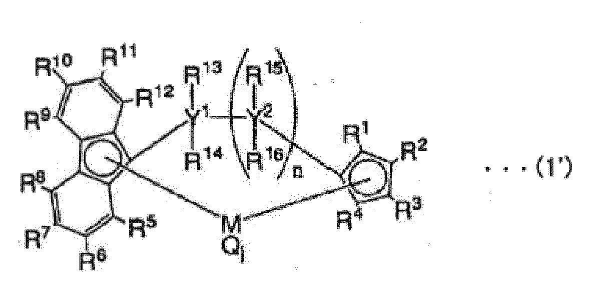 in der Formel (1') R¹, R², R³, R⁴, R⁵, R⁶, R⁷, R⁸, R⁹, R¹⁰, R¹¹ und R¹² gleich oder verschieden sind und aus einem Wasserstoffatom, einer Kohlenwasserstoffgruppe und einer Silizium enthaltenden Gruppe ausgewählt sind; R¹³, R¹⁴, jedes R¹⁵ und jedes R¹⁶ gleich oder verschieden sind und aus einem Wasserstoffatom und einer Kohlenwasserstoffgruppe ausgewählt sind; oder benachbarte Substituenten von R⁵ bis R¹² zur Bildung eines Rings zusammengenommen werden können, R¹³ und R¹⁵ zur Bildung eines Rings zusammengenommen werden können, oder R¹³ und R¹⁵ zur Bildung eines Rings zusammengenommen werden können und gleichzeitig R¹⁴ und R¹⁶ zur Bildung eines Rings zusammengenommen werden können; n eine ganze Zahl von 1 bis 3 ist und, wenn n 1 ist, R¹ bis R¹⁶ nicht alle ein Wasserstoffatom sind; Y¹ und Y² ein Atom der Gruppe 14 sind und gleich oder voneinander verschieden sein können; M Ti, Zr oder Hf ist; Q ausgewählt ist aus einem Halogen, einer Kohlenwasserstoffgruppe, einem anionischen Liganden und einem neutralen Liganden, der mit einem einzelnen Elektronenpaar koordiniert werden kann, wobei bei Vorliegen von zwei oder mehr Q-Gruppen Q jeweils gleich oder verschieden sein kann; und j eine ganze Zahl von 1 bis 4 ist.

2. Verfahren nach Anspruch 1, wobei die intrinsische Viskosität [η] des Olefin-(Co)polymers mit niedrigem Molekulargewicht, die in Decalin bei 135°C gemessen wird, 0,6 dl/g oder weniger ist.

3. Verfahren nach Anspruch 1 oder 2, wobei das Olefin-(Co)polymer mit niedrigem Molekulargewicht durch Homopolymerisation oder Copolymerisation von Olefin(en) mit 2 bis 20 Kohlenstoffatomen in einer beliebigen Kombination erhalten wird.

4. Verfahren nach Anspruch 3, wobei mindestens ein Olefin Ethylen, Propylen, 1-Octen, 1-Decen, 1-Dodecen oder 1-Tetradecen ist.

5. Verfahren nach einem der Ansprüche 1 bis 4, wobei die durchschnittliche Verweilzeit der Polymerisation 2 Stunden oder weniger beträgt.

6. Verwendung eines Olefin-Polymerisationskatalysators zur Herstellung eines Olefin-(Co)polymers mit niedrigem Molekulargewicht durch Homopolymerisation oder Copolymerisation eines Olefins, bei dem Ethylen als Hauptmonomer verwendet wird, in einem Bereich von 100 bis 250°C, wobei der Katalysator umfasst:
(A) eine Übergangsmetallverbindung der Gruppe 4, die durch die allgemeinen Formeln (1) und (1') dargestellt ist, wie in Anspruch 1 angegeben, und
(B) mindestens eine Verbindung, die ausgewählt ist aus (B-1) einer Organometallverbindung, (B-2) einer Organoaluminiumverbindung, (B-3) einer Organoaluminiumoxyverbindung und (B-4) einer Verbindung, die mit der Übergangsmetallverbindung (A) der Gruppe 4 reagiert, um ein Ionenpaar zu bilden.

## Revendications

1. Procédé de préparation d'un polymère ou copolymère d'oléfine(s) à faible masse moléculaire, qui comporte le fait de faire homopolymériser ou copolymériser une ou des oléfine(s), l'éthylène étant utilisé comme principal monomère, dans l'intervalle de 100 à 250 °C et en présence d'un catalyseur de polymérisation d'oléfines, lequel catalyseur comprend :
A) un composé d'un métal de transition du Groupe 4, représenté par l'une des formules générales (1) et (1') figurant ci-dessous,
B) et au moins un composé choisi parmi les suivants :
B-1) un composé organométallique,
B-2) un composé de type organo-aluminium,
B-3) un composé de type organo-oxy-aluminium,
B-4) et un composé qui réagit avec le composé d'un métal de transition du Groupe 4 pour donner une paire d'ions ; 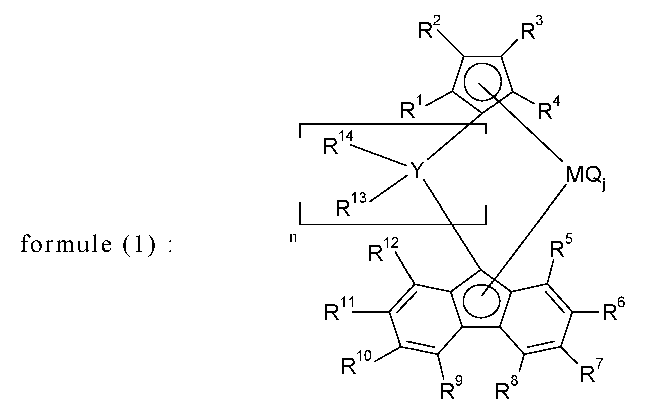
dans laquelle
- les entités représentées par les symboles R¹, R², R³, R⁴, R⁵, R⁶, R⁷, R⁸, R⁹, R¹⁰, R¹¹, R¹², chaque symbole R¹³ et chaque symbole R¹⁴ sont identiques ou différentes et sont choisies parmi un atome d'hydrogène, un groupe hydrocarboné et un groupe contenant du silicium, ou des substituants adjacents représentés par certains de ces symboles R¹ à R¹⁴ peuvent conjointement constituer un cycle,
- M représente un atome de titane, de zirconium ou de hafnium,
- chaque symbole Y représente un atome d'un élément du groupe 14, lesquels atomes peuvent être identiques ou différents,
- Q représente une entité choisie parmi un atome d'halogène, un groupe hydrocarboné, un diène neutre conjugué ou non-conjugué comportant au plus 10 atomes de carbone, un ligand anionique, et un ligand neutre qui peut être coordiné par l'intermédiaire d'une paire d'électrons libre, étant entendu que, si les entités représentées par Q sont au nombre de deux ou plus, elles peuvent être identiques ou différentes,
- l'indice n est un nombre entier qui vaut de 2 à 4,
- et l'indice j est un nombre entier qui vaut de 1 à 4 ; 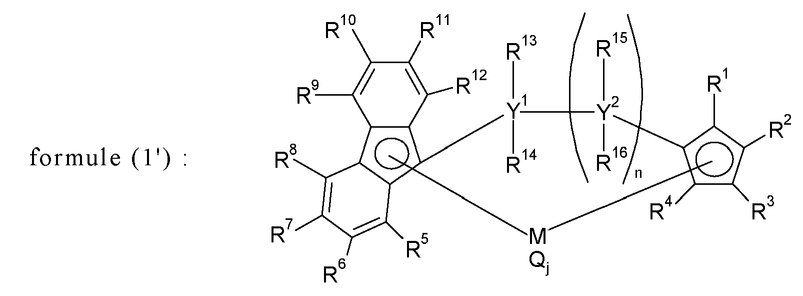
dans laquelle
- les entités représentées par les symboles R¹, R², R³, R⁴, R⁵, R⁶, R⁷, R⁸, R⁹, R¹⁰, R¹¹ et R¹² sont identiques ou différentes et sont choisies parmi un atome d'hydrogène, un groupe hydrocarboné et un groupe contenant du silicium, et les entités représentées par R¹³, R¹⁴, chaque symbole R¹⁵ et chaque symbole R¹⁶ sont identiques ou différentes et sont choisies parmi un atome d'hydrogène et un groupe hydrocarboné, ou des substituants adjacents représentés par certains des symboles R⁵ à R¹² peuvent conjointement constituer un cycle, et les entités représentées par les symboles R¹³ et R¹⁵ peuvent conjointement constituer un cycle, ou les entités représentées par les symboles R¹³ et R¹⁵ peuvent conjointement constituer un cycle, et en même temps, les entités représentées par les symboles R¹⁴ et R¹⁶ peuvent conjointement constituer un cycle,
- l'indice n est un nombre entier qui vaut de 1 à 3, étant entendu que, si n vaut 1, les symboles R¹ à R¹⁶ ne représentent pas tous des atomes d'hydrogène,
- les symboles Y¹ et Y² représentent chacun un atome d'un élément du groupe 14, lesquels atomes peuvent être identiques ou différents,
- M représente un atome de titane, de zirconium ou de hafnium,
- Q représente une entité choisie parmi un atome d'halogène, un groupe hydrocarboné, un ligand anionique, et un ligand neutre qui peut être coordiné par l'intermédiaire d'une paire d'électrons libre, étant entendu que, si les entités représentées par Q sont au nombre de deux ou plus, elles peuvent être identiques ou différentes,
- et l'indice j est un nombre entier qui vaut de 1 à 4.

2. Procédé conforme à la revendication 1, dans lequel la viscosité intrinsèque [η] du polymère ou copolymère d'oléfine(s) à faible masse moléculaire, mesurée dans de la décaline à 135 °C, est inférieure ou égale à 0,6 dL/g.

3. Procédé conforme à la revendication 1 ou 2, dans lequel le polymère ou copolymère d'oléfine(s) à faible masse moléculaire est obtenu par polymérisation ou copolymérisation d'oléfine(s) comportant de 2 à 20 atomes de carbone, en une combinaison arbitraire.

4. Procédé conforme à la revendication 3, dans lequel au moins une oléfine est de l'éthylène, du propylène, de l'oct-1-ène, du déc-1-ène, du dodéc-1-ène, ou du tétradéc-1-ène.

5. Procédé conforme à l'une des revendications 1 à 4, dans lequel, pour la polymérisation, le temps de séjour moyen est inférieur ou égal à 2 heures.

6. Utilisation d'un catalyseur de polymérisation d'oléfines pour la préparation d'un polymère ou copolymère d'oléfine(s) à faible masse moléculaire par homopolymérisation ou copolymérisation d'une oléfine ou d'oléfine(s), l'éthylène étant utilisé comme principal monomère, dans l'intervalle de 100 à 250 °C, lequel catalyseur comprend :
A) un composé d'un métal de transition du Groupe 4, représenté par l'une des formules générales (1) et (1') définies dans la revendication 1,
B) et au moins un composé choisi parmi les suivants :
B-1) un composé organométallique,
B-2) un composé de type organo-aluminium,
B-3) un composé de type organo-oxy-aluminium,
B-4) et un composé qui réagit avec le composé d'un métal de transition du Groupe 4 pour donner une paire d'ions.
